# EUROPÄISCHE PATENTSCHRIFT

(11) **EP 4 465 463 B1**
(45) Veröffentlichungstag und Bekanntmachung des Hinweises auf die Patenterteilung: **21.01.2026**
(21) Anmeldenummer: 23173930.1
(22) Anmeldetag: 17.05.2023
(51) Int. Cl.: H02G 1/12, H02K 15/0421

(54) **VORRICHTUNG UND VERFAHREN ZUM ENTFERNEN EINER ISOLIERSCHICHT AUF EINEM LÄNGENABSCHNITT EINES DRAHTS**
DEVICE AND METHOD FOR REMOVING AN INSULATING LAYER ON A LENGTH SECTION OF A WIRE
DISPOSITIF ET PROCÉDÉ POUR ENLEVER UNE COUCHE ISOLANTE SUR UNE SECTION LONGITUDINALE D'UN FIL

(43) Veröffentlichungstag der Anmeldung: 20.11.2024
(73) Patentinhaber: Grob-Werke GmbH & Co. KG, 87719 Mindelheim (DE)
(72) Erfinder: Lutzenberger, Markus, 87719 Mindelheim (DE); Dreher, Clemens, 87719 Mindelheim (DE)
(74) Vertreter: KASTEL Patentanwälte PartG mbB

(56) Entgegenhaltungen:
- US-B2- 11 018 482

## Beschreibung

Die Erfindung betrifft eine Vorrichtung zum Entfernen einer Isolierschicht auf einem Längenabschnitt eines Drahts zum Bilden einer Spulenwicklung einer elektrischen Maschine. Weiter betrifft die Erfindung ein Verfahren zum Entfernen einer Isolierschicht auf einem Längenabschnitt eines Drahts zum Bilden einer Spulenwicklung einer elektrischen Maschine.

Zum technologischen Hintergrund wird auf folgende Literaturstellen verwiesen:
[1] EP 2 684 283 B1
[2] EP 1 554 794 B1
[3] EP 1 041 696 B1
[4] WO 2019/161 832 A1
[5] WO 2019/101 272 A1
[6] WO 2019/020148 A1
[7] WO 2019/166061 A1
[8] DE 10 2018 106 977 A1
[9) US 11 018 482 B1
[10] EP 3 758 167 A1

Unter elektrischen Maschinen werden insbesondere Maschinen zum Umwandeln elektrischer Energie in Bewegungsenergie und Maschinen zum Umwandeln von Bewegungsenergie in elektrische Energie verstanden. Insbesondere sind darunter Elektromotoren und Generatoren zu verstehen. Zur Herstellung von Maschinenelementen derartiger elektrischer Maschinen, wie beispielsweise Statoren oder Rotoren, ist es in vielen Fällen erforderlich, elektrisch leitende Drähte zu formen, miteinander zu verbinden, zu schneiden, oder auf sonstige Weise zu verarbeiten. Der Draht kann dabei insbesondere auch einen rechteckigen Querschnitt haben, als Flach-, Vierkant- oder Profildraht ausgestattet sein, oder zum Beispiel als Flachbandstahl oder ähnliches vorliegen. Die Herstellung der Maschinenelemente erfolgt üblicherweise in einer Produktionsanlage, in der Draht aus elektrisch leitfähigem Material weiterverarbeitet wird. Somit kann bei der Herstellung eines Maschinenelements einer elektrischen Maschine eine kontinuierliche Materialeinbringung in den Herstellungsprozess erreicht werden, was zu einer hohen Produktivität führt.

Bei der Herstellung von Elektromotoren für Kraftfahrzeuge werden zumeist industrielle Serienproduktionsverfahren mit hoher Taktzahl angewendet, die eine besonders wirtschaftliche Fertigung leistungsfähiger Bauteile für Elektromotoren ermöglichen.

Beispiele zu Produktionsverfahren, bei denen die Vorrichtung und das Verfahren gemäß erfindungsgemäßer Ausführungsformen anwendbar sind, sind das Hairpin-Verfahren sowie das Wellenwicklungsverfahren. Bei dem besonders bevorzugten Hairpin-Verfahren werden Spulenwicklungen, insbesondere des Stators, aus unterschiedlichen Drahtstücken gebildet, deren Enden miteinander verbunden werden. Beispielsweise beschreiben hierzu die Literaturstellen [1] bis [4] Vorrichtungen und Verfahren zum Durchführen unterschiedlicher Schritte des Hairpin-Verfahrens, wie insbesondere des Formens von Hairpins und Verbindens von Drahtenden von Hairpins zum Bilden von Statorwicklungen elektrischer Maschinen, bei denen die Drahtenden miteinander verschweißt werden. Bei dem Wellenwicklungsverfahren, von denen Beispiele aus den Literaturstellen [4] bis [7] bekannt ist, werden insbesondere Enden der Wellenwicklungen aneinander oder an ein Verschaltelement zum Anschluss der Spulenwicklung verbunden, insbesondere verschweißt.

Ausgangsmaterial für die Herstellung der unterschiedlichen Spulenwicklungen ist üblicherweise ein Kupferdraht, der mit einer Isolationsschicht versehen ist. Die Isolationsschicht ist vorwiegend aus Kunststoff gefertigt. Im Regelfall handelt es sich dabei um einen Rechteckdraht (bspw. aus Kupfer oder einem anderen Metall) mit verrundeten Kanten. Das Verschweißen der einzelnen Spulenwicklungsteile wie Hairpins oder Wellenwicklungsdrähte zu einer durchgehenden Wicklung ist ein wesentlicher Herstellungsschritt. Voraussetzung für eine fehlerfreie Schweißverbindung ist, dass die beiden zu verbindenden Enden auf einer definierten Länge keine Isolationsschicht aufweisen. Hauptsächlich wird die Isolationsschicht, die beispielsweise eine isolierende Lackschicht ist, mittels Schaben oder Hobeln abgetragen. Dies kann sowohl in Längsrichtung des Drahts als auch quer zum Draht erfolgen. Beispiele für bekannte Vorrichtungen und Verfahren zum Entfernen der Isolierung sind in der Literaturstelle [8] offenbart.

Bevorzugte Ausführungsformen der Erfindung liegen auf dem Gebiet der Elektromotorfertigung mittels Hairpin-Verfahren und betreffen das Entfernen einer Isolationsschicht von einem Draht, üblicherweise Kupferdraht. Wie oben bereits erläutert wird beim Hairpin-Verfahren der Draht zunächst zu Hairpins (d.h. einem Stück Draht in einer Form mit einem ersten und einem zweiten Schenkel, wo der Draht im Wesentlichen geradlinig verläuft, und mit einem in der Regel dachförmigen dreidimensional geformten Verbindungsabschnitt zwischen den Schenkeln, der im Gebrauch einen Wickelkopf bildet) gebogen und die einzelnen Hairpins später miteinander verschweißt, wofür die Isolationsschicht an der Schweißstelle zuvor entfernt werden muss. Hierzu sind bereits verschiedene Verfahren bekannt, die beispielsweise mittels Laserabtrag, Fräsen oder durch Schaben die Isolationsschicht abtragen.

Bei einem Abisolieren mittels Fräsen entstehen sehr viel kleine Späne, die schwierig vom Hairpin-Draht zu entfernen sind. Durch eine schlechte Qualität und Verschmutzung der Fräsflächen könnten Fehler in der Schweißnahtbildung entstehen. Bevorzugte Ausführungsformen der Erfindung sollen daher ein Abisolieren mittels Abschabens ermöglichen, um die Qualität und Sauberkeit der abisolierten Stellen zu verbessern.

Ein Verfahren zum Abschaben der Isolationsschicht wird in der [9] offenbart, wobei die Isolationsschicht durch ein Paar Schälmesser entfernt wird, die orthogonal zur Drahtrichtung zugestellt werden. Der Draht wird dabei durch gegenüberliegende Greifer gehalten, wobei die Bewegung der Schneiden zum Draht auch eine Zustellung der Greifer bewirkt.

In der [10] wird eine Vorrichtung zum Abschaben von Isolationsmaterial beschrieben, bei der vier Klingen auf jeweils einer Halterung angebracht sind, wobei zwei Klingen jeweils zusammenwirken. Durch Ansteuerung der Halter werden alle vier Seiten des Drahtes durch die Klingen geklemmt. Anschließend wird die Plattform mit dem Kupferdraht bewegt, wodurch die die Beschichtung von den vier zugestellten Klingen abgeschabt wird.

Die Erfindung hat sich zur Aufgabe gestellt, ein Abisolieren mit hoher Qualität bei hoher Geschwindigkeit zu ermöglichen.

Zum Lösen dieser Aufgabe schafft die Erfindung eine Vorrichtung gemäß Anspruch 1 und ein Verfahren sowie ein Computerprogramm gemäß den Nebenansprüchen.

Vorteilhafte Ausgestaltungen sind Gegenstand der Unteransprüche.

Die Erfindung schafft eine Vorrichtung zum Entfernen einer Isolierschicht auf einem Längenabschnitt eines Drahts zum Bilden einer Spulenwicklung einer elektrischen Maschine, umfassend:
eine Drahtführung zum Hindurchführen des zu bearbeitenden Drahtes in einer Drahtbewegungsrichtung;
eine Schieberanordnung mit mehreren Schiebern, die um den durch die Drahtführung zu führenden Draht herum angeordnet sind und radial zum in der Drahtführung geführten Draht hin und her verschiebbar sind, wobei wenigstens ein Schneidschieber mit einer Schneide zum Abschaben der Isolierung und wenigstens ein Gegenlagerschieber zum Gegenhalten des Drahtes beim Abschaben derart vorgesehen sind, dass sich jeweils ein Schneidschieber und ein Gegenlagerschieber gegenüberstehen und aufeinander zu und voneinander weg bewegbar sind, und
eine Kurvenscheibe mit einer Mittelöffnung, durch die der Draht mittels der Drahtführung hindurchführbar ist, wobei die Kurvenscheibe durch einen Kurvenscheibenantrieb drehbar ist und einen ersten zumindest teilweise ringförmig umlaufende Steuerkurvenbereich zum Steuern und/oder Antreiben der Bewegung des wenigstens einen Schneidschiebers und einen zweiten zumindest teilweise ringförmig umlaufenden Steuerkurvenbereich zum Steuern und/oder Antreiben der Bewegung des wenigstens einen Gegenlagerschieber hat.

Es ist bevorzugt, dass die Schieberanordnung wenigstens zwei der Schneidschieber und wenigstens zwei der Gegenlagerschieber aufweist.

Es ist bevorzugt, dass der erste und der zweite Steuerkurvenbereich unterschiedliche Bereiche einer gemeinsamen zumindest teilweise oder vollständig ringförmig umlaufenden Steuerkurve sind.

Es ist bevorzugt, dass der erste Steuerkurvenbereich und der zweite Steuerkurvenbereich auf axial oder radial beabstandeten unterschiedlichen Steuerkurven ausgebildet sind.

Es ist bevorzugt, dass der erste Steuerkurvenbereich durch eine erste ringförmig umlaufende Steuerkurve zum Steuern und/oder Antreiben der Bewegung mehrerer, vorzugsweise aller, Schneidschieber gebildet ist und dass der zweite Steuerkurvenbereich durch eine zweite ringförmig umlaufenden Steuerkurve zum Steuern und/oder Antreiben der Bewegung mehrerer, vorzugsweise aller, Gegenlagerschieber ist. Vorzugsweise greift jeder Schneidschieber an unterschiedlichen in Umfangsrichtung beabstandeten Stellen an der ersten Steuerkurve der Kurvenscheibe an. Vorzugsweise greift jeder Gegenlagerschieber an unterschiedlichen in Umfangsrichtung beabstandeten Stellen an der zweiten Steuerkurve der Kurvenscheibe an

Es ist bevorzugt, dass die Kurvenscheibe mittels eines durch eine elektronische Steuereinheit angesteuerten Servoantriebs als Kurvenscheibenantrieb drehangetrieben ist.

Es ist bevorzugt, dass die Kurvenscheibe mittels eines Endloszugmittelgetriebes, insbesondere Riementriebs, mit dem Kurvenscheibenantrieb verbunden ist. Vorzugsweise ist ein formschlüssiges Endloszugmittelgetriebe vorgesehen, beispielsweise ein Zahnriementrieb.

Es ist bevorzugt, dass die Steuerkurvenbereiche und/oder die Steuerkurven durch sich in einer Umfangsrichtung und ein einer Axialrichtung erstreckende Flächen an der Kurvenscheibe gebildet ist. Es ist bevorzugt, dass die Steuerkurvenbereiche oder Steuerkurven als axial vorstehende Wülste ausgebildet sind, wobei die Schieber Paare von Kurvenfolgeelementen, insbesondere Stiften oder Kurvenrollen, aufweisen, die den zugehörigen Wulst zwischen sich aufnehmen. Selbstverständlich sind aber auch andere Ausbildungen und Anordnungen von Steuerkurven möglich; beispielsweise können die oder eine der Steuerkurven oder der Steuerkurvenbereiche auch als Ausnehmungen, Nuten, Schlitze oder äußere Randoberflächen an der Kurvenscheibe ausgebildet sein. Auch kann die Kurvenscheibe ringförmig ausgebildet sein, wobei eine nach innen gerichtete sich in einer Umfangsrichtung und einer Axialrichtung verlaufende Fläche als Steuerkurve dient.

Es ist bevorzugt, dass die Schieberanordnung gleichmäßig im Kreis um das Zentrum, in dem der Draht geführt wird, angeordnete Schieber aufweist.

Es ist bevorzugt, dass die Schieberanordnung einen ersten bis vierten Schieber aufweist.

Es ist bevorzugt, dass die Schieberanordnung einen ersten bis achten Schieber aufweist.

Es ist bevorzugt, dass die Schieberanordnung mehrere Paare sich radial gegenüberliegender Schieber mit einem Schneidschieber und einem Gegenhalterschieber aufweist.

Es ist bevorzugt, dass die Schieberanordnung taktweise mit dem Draht mitbewegbar ist. Insbesondere ist die Schieberanordnung oder eine die Schieberanordnung aufweisende Abisolier- oder Abschab-Einrichtung in einer linearen Richtung parallel zu dem Draht hin- und Her bewegbar, um sich mit dem Draht mitbewegen zu können. Das Mitbewegen erfolgt vorzugsweise mittels eines entsprechenden Bewegungsmechanismus mit wenigstens einem durch eine Steuereinheit angesteuerten Aktor. Das Mitbewegen erfolgt vorzugsweise derart, dass trotz sich, z.B. kontinuierlich, weiterbewegendem Draht (z.B. mit kontinuierlicher oder schwellender Bewegung) keine relative Bewegung zwischen Schieberanordnung und Draht vorliegt.Vorzugsweise ist die Vorrichtung dazu eingerichtet, dass sich dabei nicht nur die Schieberanordnung, sondern die gesamte Abisolier- oder Abschab-Einrichtung einschließlich Kurvenscheibe und gegebenenfalls Kurvenscheibenantrieb mitbewegt. Insbesondere ist die Steuereinheit dazu ausgebildet, den Bewegungsmechansimus dazu anzusteuern, die Abisolier- oder Abschab-Einrichtung synchron mit dem Draht mitzubewegen.

Es ist bevorzugt, dass der oder die Schneidschieber jeweils einen Messersatz mit mehreren Messern aufweisen, die zum Abschaben der Isolierung auf entgegengesetzten Seiten des Drahtes ausgebildet sind.

Es ist bevorzugt, dass der wenigstens eine Schneidschieber (insbesondere ein einzelner vorgesehener Schneidschieber oder jeder von mehreren Schneidschiebern) pro Messer ein Führungselement aufweist, das jeweils um eine Messerschneide des Messers vorlaufend herumgeführt ist und einen Höhenversatz zum Messer aufweist, durch den die Eindringtiefe des Messers in den Draht bestimmbar ist.

Es ist bevorzugt, dass der wenigstens eine Schneidschieber (insbesondere ein einzelner vorgesehener Schneidschieber oder jeder von mehreren Schneidschiebern) ein in eine Auswurfstellung elastisch vorgespanntes Auswurfelement zum Unterstützen eines Auswerfens des Drahtes aus dem Messersatz aufweist.

Es ist bevorzugt, dass der wenigstens eine Schneidschieber (insbesondere ein einzelner vorgesehener Schneidschieber oder jeder von mehreren Schneidschiebern) eine Abstimmscheibe zwischen den Messern zum Einstellen des Messerabstandes aufweist.

Es ist bevorzugt, dass der Messersatz ein erstes und ein zweites Messer aufweist.

Es ist bevorzugt, dass der Messersatz Messer aufweist, die jeweils aus einer Hartmetallplatte mit einer angespitzten Form gebildet sind.

Es ist bevorzugt, dass der Messersatz Messerschneidkanten an den Messern aufweist, deren Spitze angefast ist, um einen Keilwinkel zu bilden.

Es ist bevorzugt, dass der oder die Gegenlagerschieber jeweils ein Gegenlagerelement zum Anlegen an den Draht aufweisen.

Es ist bevorzugt, dass der oder die Gegenlagerschieber jeweils Führungszangen zum Vorpositionieren des Drahtes aufweisen.

Vorzugsweise weist die Vorrichtung eine elektronische Steuereinheit - insbesondere eine Recheneinheit oder Computer wie zum Beispiel ECU, Mikrocontroller oder als Software oder Hardware ausgebildeter Teil einer Gesamtsteuerung einer größeren Produktionsanlage - auf, die dazu ausgebildet ist, die Vorrichtung anzusteuern zum taktweisen Durchführen der Schritte:
a) Relativbewegen der Vorrichtung und des zu bearbeitenden Drahts in dessen Längsrichtung, so dass eine relative Bewegung des Drahts durch das Zentrum der Schieberanordnung erfolgt und
b) Stoppen der Relativbewegung und
c) Drehen der Kurvenscheibe, um die Schieber zum Abschaben der Isolierung anzutreiben; und Wiederholen der Schritte a) bis c), um den Draht an einem anderen Längenabschnitt abzuisolieren.

Bei einer Ausgestaltung können in Schritt a) der Draht durch die stationäre Vorrichtung oder Einrichtung bewegt werden, dann in Schritt b) die Drahtbewegung gestoppt werden, um dann während des Stopps Schritt c) durchzuführen. Bei bevorzugten Ausführungsformen ist zumindest die Schieberanordnung oder auch eine größere Einheit - wie insbesondere die Abisolier- oder Abschab-Einrichtung - der Vorrichtung oder die gesamte Vorrichtung beweglich ausgebildet und dazu eingerichtet, zum Durchführen von Schritt b) synchron mit dem sich vorzugsweise kontinuierlich bewegenden Draht mitbewegt zu werden, so dass die Schieberanordnung zum Durchführen von Schritt c) relativ zu dem Draht still steht.

Es ist bevorzugt, dass die Steuereinheit dazu ausgebildet ist, die Vorrichtung beim Durchführen von Schritt c) zum Drehen der Kurvenscheibe mit wenigstens einer vollständigen Umdrehung anzusteuern, um nacheinander die Schieber zum Abschaben der Isolierung anzutreiben.

Gemäß einem weiteren Aspekt schafft die Erfindung ein Verfahren zum Entfernen einer Isolierschicht auf einem Längenabschnitt eines Leiters zum Bilden einer Spulenwicklung einer elektrischen Maschine, umfassend:
Bereitstellen einer Vorrichtung nach einem der voranstehenden Ansprüche, und taktweises Durchführen der Schritte:
a) Relativbewegen der Vorrichtung und des zu bearbeitenden Drahts in dessen Längsrichtung, so dass eine relative Bewegung des Drahts durch das Zentrum der Schieberanordnung erfolgt, und
b) Stoppen der Relativbewegung und
c) Drehen der Kurvenscheibe, um die Schieber zum Abschaben der Isolierung anzutreiben; und Wiederholen der Schritte a) bis c), um den Draht an einem anderen Längenabschnitt abzuisolieren.

Vorzugsweise wird eine Vorrichtung mit wenigstens zwei Schneidschiebern und wenigstens zwei Gegenlagerschiebern bereitgestellt, wobei Schritt b) umfasst:
Drehen der Kurvenscheibe mit wenigstens einer vollständigen Umdrehung, um nacheinander die Schieber zum Abschaben der Isolierung anzutreiben.

Bei einer Ausgestaltung der Vorrichtung und/oder des Verfahrens können bei Schritt a) der Draht durch die stationäre Vorrichtung bewegt werden, dann in Schritt die Drahtbewegung gestoppt werden, um dann während des Stopps Schritt c) durchzuführen. Bei bevorzugten Ausführungsformen ist zumindest die Schieberanordnung oder auch eine größere Einheit oder Einrichtung der Vorrichtung oder die gesamte Vorrichtung beweglich ausgebildet und dazu eingerichtet, zum Durchführen von Schritt b) synchron mit dem sich vorzugsweise kontinuierlich bewegenden Draht mitbewegt zu werden, so dass die Schieberanordnung zum Durchführen von Schritt c) relativ zu dem Draht still steht.

Gemäß einem weiteren Aspekt schafft die Erfindung ein Computerprogramm, umfassend Befehle, die bewirken, dass die Vorrichtung nach einer der voranstehenden Ausgestaltungen die Verfahrensschritte des Verfahrens nach einer der voranstehenden Ausgestaltungen ausführt.

Bevorzugte Ausgestaltungen der Erfindung betreffen eine Vorrichtung und ein Verfahren zum Abisolieren eines Hairpindrahts mittels Schaben quer zur Drahtrichtung.

Bevorzugte Ausgestaltungen ermöglichen ein Schaben auch bei sehr schnellen industriellen Großserienfertigungen mit sehr geringen Taktzeiten.

Bevorzugte Ausgestaltungen ermöglichen das Querschaben auf einem relativen Stopp von Draht und Abisolierungseinheit mit der Taktzeit von 1s oder weniger.

Ein Stopp bedeutet, dass der Draht während des Prozesses keine relative Bewegung zu der beschriebenen Einheit hat und somit stillsteht. Dies kann durch Stoppen des Drahtes, vorzugsweise aber durch Mitbewegung der Abisolier-Einrichtung erfolgen.

Bevorzugter Ausgestaltungen der Erfindung weisen einen oder mehrere der folgenden Vorteile auf:
- Abisolieren eines endlosen Drahtes (insbesondere Hairpin-Drahtes, geht aber auch zum Abisolieren der Enden von Wellenwicklungsdrähten) auf nur einem Stopp
- Taktzeit von einer Sekunde (z.B. 0.4 Sekunden zum Abisolieren, 0.6 Sekunden, um die Vorrichtung oder Einrichtung zur nächsten Abisolierstelle zu bewegen)
- nur ein Servomotor notwendig

Ausführungsbeispiele der Erfindung werden im Folgenden anhand der beigefügten Zeichnungen näher erläutert. Darin zeigt:
- Fig. 1: eine schematische Seitenansicht einer Ausführungsform einer Vorrichtung zum Entfernen einer Isolierschicht auf einem Längenabschnitt eines Leiters, welche eine Einrichtung zum Entfernen einer Isolierschicht auf einem Längenabschnitt eines Leiters, einen Bewegungsmechanismus zum Bewegen der Einrichtung und eine Steuereinheit aufweist;
- Fig. 2: eine Vorderansicht auf eine Ausführungsform der Einrichtung zum Entfernen einer Isolierschicht auf einem Längenabschnitt eines Leiters in Form eines Drahts in Ansicht gegen Drahttaktrichtung (Bewegungsrichtung des Leiters/Drahts) gesehen;
- Fig. 3: eine Rückansicht der der Einrichtung von Fig. 2 in Drahttaktrichtung gesehen;
- Fig. 4 und 5: perspektivische Ansichten der Einrichtung von Fig. 2 und 3;
- Fig. 6: eine perspektivische Ansicht einer Schieberanordnung, einer Kurvenscheibe und eines Kurvenscheibenantriebs der Einrichtung gemäß den Fig. 2 bis 5;
- Fig. 7: eine Vorderansicht in Drahttaktrichtung, die ein Detail des Zentrums der Schieberanordnung zeigt, wobei alle Schieber der Schieberanordnung in Grundstellung außer Eingriff mit dem Draht sind;
- Fig. 8 und 9: perspektivische Ansichten des Details von Fig. 7;
- Fig. 10: eine Ansicht wie in Fig. 8, wobei ein Paar sich radial gegenüberliegende Schieber der Schieberanordnung in einer Eingriffsstellung in Eingriff mit dem Draht sind;
- Fig. 11: eine Vorderansicht wie in Fig. 7 beim auch in Fig. 10 gezeigten Eingriff des Paars Schieber mit dem Draht, wobei das Paar Schieber einen Schneidschieber und einen Gegenlagerschieber aufweist;
- Fig. 12: eine Vorderansicht auf das Paar Schieber in der Grundstellung;
- Fig. 13: eine teils weggebrochene perspektivische Darstellung der Einrichtung zur Verdeutlichung der Ausbildung der Kurvenscheibe;
- Fig. 14: eine perspektivische Ansicht des zum Draht hin gerichteten Vorderendes des Gegenlagerschiebers;
- Fig. 15: eine Vorderansicht auf die zum Draht hin gerichteten Vorderenden des Gegenlagerschiebers und des Schneidschiebers in der Eingriffsstellung;
- Fig. 16: eine perspektivische Ansicht des zum Draht hin gerichteten Vorderendes des Schneidschiebers;
- Fig. 17: eine Draufsicht auf ein Messer eines Messersatzes des Schneidschiebers;
- Fig. 18: eine Vorderansicht auf das Messer von Fig. 17;
- Fig. 19: eine Vorderansicht des Messersatzes;
- Fig. 20: eine Draufsicht auf ein Führungselement des Schneidschiebers;
- Fig. 21: eine vergrößerte Vorderansicht eines Details des vorderen Endes des Schneidschiebers, wobei ein Paar Führungselemente mit einem sich in Auswurfstellung befindlichen Auswurfelement dazwischen dargestellt ist;
- Fig. 22: eine teils weggebrochene Draufsicht auf das vordere Ende des Schneidschiebers, um die Ausbildung des Auswurfselement zu verdeutlichen;
- Fig. 23: eine Vorderansicht der Anordnung des Paars Führungselemente mit dem Auswurfelement;
- Fig. 24: eine Schnittansicht einer Schneide des Schneidschiebers mit der Anordnung von Fig. 23 und dem Messersatz;
- Fig. 25: einen Querschnitt durch den abzuisolierenden Längenabschnitt des vor dem Abisolieren; und
- Fig. 26: den gleichen Querschnitt wie in Fig. 25 nach dem Abisolieren.

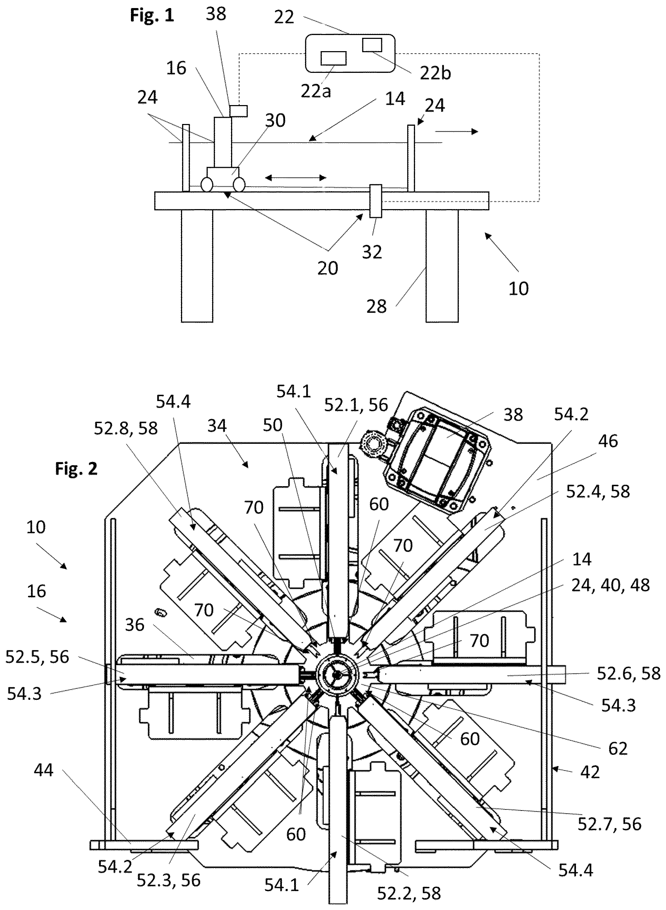

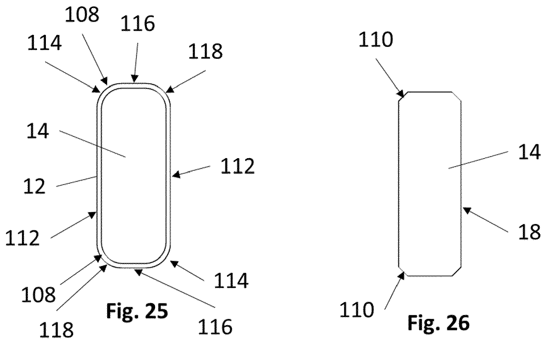

Fig. 1 zeigt eine schematische Blockdarstellung einer Vorrichtung 10 zum Entfernen einer Isolierschicht 12 auf einem Längenabschnitt 18 eines Leiters zum Bilden eine Spulenwicklung einer elektrischen Maschine. Die Vorrichtung 10 ist dazu eingerichtet, an vorbestimmten Stellen eines mit einer Isolierschicht 12 versehenen Drahts 14 (Beispiel im Schnitt in Fig. 26 dargestellt), jeweils einen Längenabschnitt 18 abzuisolieren. Ein zwischen aufeinanderfolgenden abisolierten Längenabschnitten 18 befindlicher Drahtabschnitt kann in späteren Prozessschritten, wie sie [1] bis [7] beschrieben und gezeigt sind, zu einem Leiter der Spulenwicklung der elektrischen Maschine, beispielsweise zu einem Hairpin eines nach dem Hairpin-Verfahren herzustellenden Stators, geformt werden.

Die Vorrichtung 10 weist eine (Abisolier- oder Abschab-)Einrichtung 16 zum Entfernen der Isolierschicht 12 auf den Längenabschnitten 18, einen Bewegungsmechanismus 20 zum Bewegen der Einrichtung 16 und eine Steuereinheit 22 auf. Die Steuereinheit 22 ist als elektronische Steuereinheit (Computer/Rechner) mit einem Prozessor 22a, einem Speicher 22b und einem darin abgespeicherten Computerprogramm ausgebildet. Die Steuereinheit 22 kann z.B. Teil einer Gesamtsteuerung für eine Biegeanlage (z.B. Hairpin-Biegeanlage zum Herstellen gebogener Hairpins) oder auch für eine gesamte Herstellanlage zum Herstellen eines Bauteils der elektrischen Maschine sein, siehe hierzu auch [1] bis [7].

Die Vorrichtung 10 weist eine Drahtführung 24 auf, die dazu ausgebildet ist, den Draht 14 als Endlosdraht in Drahtbewegungsrichtung 26 durch die Vorrichtung 10 zu führen. Insbesondere ist die Drahtführung 24 dazu ausgebildet, den Draht 14 durch die Vorrichtung 10 zu leiten. Die Drahtbewegung kann kontinuierlich, schwellend oder auch getaktet erfolgen. Der Bewegungsmechanismus 20 ist dazu ausgebildet, die Einrichtung 16 mit dem sich bewegenden Draht 14 mitzubewegen, so dass die Einrichtung 16 und der Draht 14 für den Abisoliervorgang, wie er im Folgenden noch näher erläutert wird, relativ zueinander still stehen. Hierzu weist der Bewegungsmechanismus 20 bei der dargestellten rein beispielhaften Ausführungsform einen auf einem Maschinengestell 28 verfahrbaren Schlitten oder Wagen 30 auf, der mittels eines Bewegungsaktors 32 durch die Steuereinheit 22 gesteuert hin und her bewegbar ist. Auf dem Wagen 30 ist die Einrichtung 16 montiert.

In den Fig. 2 bis 5 sind unterschiedliche Ansichten der Einrichtung 16 dargestellt. Die Einrichtung 16 weist eine Schieberanordnung 34, eine Kurvenscheibe 36 und einen Kurvenscheibenantrieb 38 auf. Weiter ist im Zentrum der Einrichtung eine Drahtführungseinheit 40 der Drahtführung 24 vorgesehen.

Bei der dargestellten Ausführung weist die Einrichtung 16 weiter ein Grundgestell 42 (z.B. ausgebildet als Schweißkonsole) auf, welches mit einer Basis 44 auf dem Schlitten oder Wagen 30 des Bewegungsmechanismus 20 befestigbar ist. Das Grundgestell 42 weist weiter eine Befestigungsplatte 46 auf, die sich senkrecht zur Drahtbewegungsrichtung 26 erstreckt.

Die Drahtführungseinheit 40 ist zentral durch die Befestigungsplatte 46 geführt und weist beispielsweise eine Führungsröhre 48 auf, durch die der Draht 14 hindurchgeführt ist. Beispielsweise ist die Führungsröhre 48 im Inneren eines Absaugrohrs 50 zum Absaugen von abgeschabtem Material der Isolationsschicht 12 angeordnet, wobei das Absaugrohr 50 zur Mitte der Schieberanordnung 34 hin mündet.

Die Schieberanordnung 34 weist mehrere Schieber 52.1-52.8 auf, die an der Befestigungsplatte 46 in radialer Richtung zur Drahtführungseinheit 40 hin und von dieser wieder weg verschiebbar gelagert sind. Die Schieber 52.1-52.8 sind paarweise gegenüberliegend angeordnet, so dass wenigstens ein Paar 54.1 von Schiebern 52.1, 52.2 und vorzugsweise wenigstens zwei Paare 54.1, 54.2 von Schiebern 52.1-52.4 vorgesehen sind. Die dargestellte Ausführungsform der Einrichtung 16 weist ein erstes bis viertes Paar 54.1-54.4 von Schiebern 52.1-52.8 auf. Jedes Schieber-Paar 54.1-54.4 weist einen Schneidschieber 56 und einen Gegenlagerschieber 58 auf. Somit stehen sich je ein Schneidschieber 56 und ein Gegenlagerschieber 58 radial gegenüber und sind zwischen einer Grundstellung, in der die Schieber 52.1-52.8 radial nach außen bewegt außer Eingriff vom Draht 14 liegen, und einer Eingriffsstellung bewegbar, in der die Schieber 52.1-52.8 des betreffenden Schieber-Paars in Eingriff mit dem Draht 14 sind. Bei den in den Figuren dargestellten Ausgestaltungen sind ein erster, dritter, fünfter und siebter Schieber 50.1, 50.3, 50.5, 50.7 als Schneidschieber 52 und ein zweiter, vierter, sechster und achter Schieber 50.2, 50.4, 50.6, 50.8 als Gegenlagerschieber 54 ausgebildet. Der jeweilige Schneidschieber 56 ist mit wenigstens einer Schneide 60 zum Abschaben der Isolierung versehen. Der jeweilige Gegenlagerschieber 58 ist zum Gegenhalten des Drahtes beim Abschaben vorgesehen. Somit stehen sich jeweils ein Schneidschieber 56 und ein Gegenlagerschieber 58 gegenüber und sind aufeinander zu und voneinander weg bewegbar.

Die Kurvenscheibe 34 weist eine Ausnehmung oder Öffnung, insbesondere eine Mittelöffnung 62 auf, durch die der Draht 14 mittels der Drahtführung 24 hindurchführbar ist. Insbesondere erstrecken sich die Führungsröhre 48 und mehr insbesondere das konzentrische mit der Führungsröhre 48 versehene Absaugrohr 50 durch die Mittelöffnung 62 hindurch. Die Kurvenscheibe 36 ist drehbar an der Befestigungsplatte 46 gelagert. Bei den dargestellten Ausführungen ist die Kurvenscheibe 36 um das Zentrum der Führungsröhre 48 und somit um die Mitte des darin geführten Drahtes 14 herum drehbar.

Die Drehung der Kurvenscheibe wird durch den Kurvenscheibenantrieb 38, der durch die Steuereinheit 22 angesteuert wird, angetrieben. Die Kurvenscheibe 34 weist wenigstens eine sich in einer Umfangsrichtung erstreckende mechanische Steuerkurve 64.1, 64.2 auf. An der wenigstens einen Steuerkurve 64.1, 64.2 ist ein erster zumindest teilweise ringförmig umlaufender (sich beispielsweise in einer Umfangsrichtung zumindest über einen Ringsektor hinweg erstreckender) Steuerkurvenbereich zum Steuern und/oder Antreiben der Bewegung des wenigstens einen Schneidschiebers 56 ausgebildet. Weiter ist an der wenigstens einen Steuerkurve 64.1, 64.2 ein zweiter zumindest teilweise ringförmig umlaufender (sich beispielsweise in einer Umfangsrichtung zumindest über einen Ringsektor hinweg erstreckender) Steuerkurvenbereich 66.2 zum Steuern und/oder Antreiben der Bewegung des wenigstens einen Gegenlagerschieber 58 vorgesehen.

Sind, wie dargestellt, mehrere Schieber-Paare 52.1-52.4 vorgesehen, so sind deren Schneidschieber 56 an unterschiedlichen tangentialen Positionen um den durch die Drahtführung 24 geführten Draht 14 herum angeordnet und die Gegenlagerschieber 58 liegen entsprechend gegenüber. Dabei greifen alle Schneidschieber 56 an unterschiedlichen in Umfangsrichtung beabstandeten Stellen an den ersten Steuerkurvenbereich 66.1 an. Weiter greifen alle Gegenlagerschieber an unterschiedlichen in Umfangsrichtung beabstandeten Stellen an den zweiten Steuerkurvenbereich 66.2 an. Somit werden bei Drehung der Kurvenscheibe 36 die Bewegungen aller Schieber 52.1-52.8 angetrieben.

Bei einigen Ausführungsformen ist der Kurvenscheibenantrieb 38 als durch die Steuereinheit 22 gesteuerter Servoantrieb ausgebildet. Weiter ist die Kurvenscheibe 36 bei einigen Ausführungsformen mittels eines Endloszugmittelgetriebes, insbesondere Riementriebs 68, mit dem Kurvenscheibenantrieb 38 verbunden. Der Riementrieb 68 weist beispielsweise ein Zahnriemenscheibe 68a auf der Abtriebswelle eines Servomotors des Kurvenscheibenantriebs 38 und einen Zahnriemen 68b auf, wobei die Kurvenscheibe 36 einen Zahnriemenscheibenbereich 68c mit einer Verzahnung aufweist, an der der Zahnriemen 68b formschlüssig angreift.

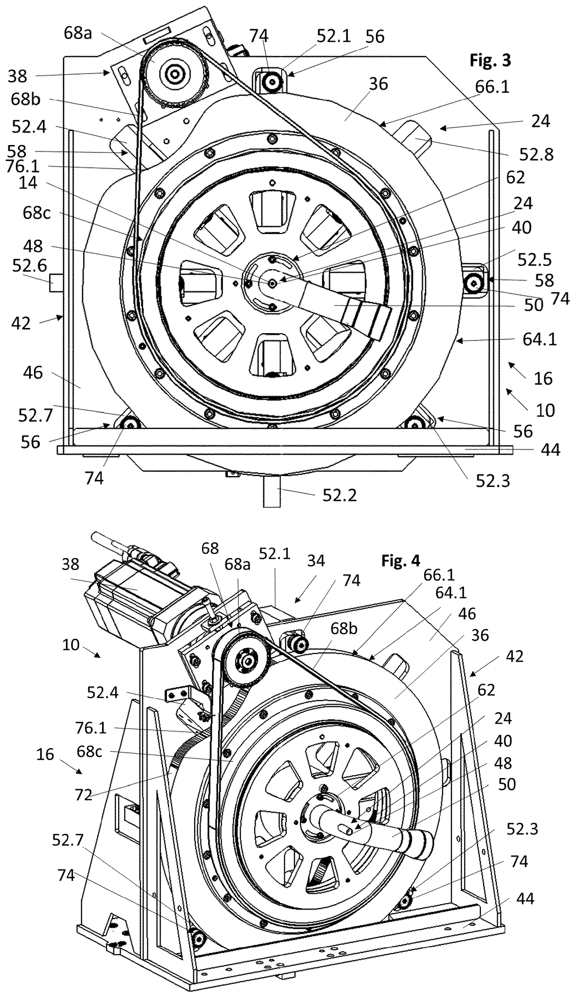

Die dargestellte Ausführungsform der Vorrichtung 10 ist dazu ausgebildet, einen endlosen Hairpin-Draht 14 für eine bestimmte Länge (z.B. 10 bis 50 mm, insbesondere 40 mm) an allen vier Seiten und Radien ab zu isolieren. Der Abisolierprozess kann zudem auf einem Stopp stattfinden. Ein Stopp wird bei der dargestellten Ausführungsform durch einen Takt des relativen Stillstands - bei Mitbewegung der Einrichtung 16 mit dem Draht 14 - realisiert. Fig. 2 zeigt dabei eine Ansicht gegen die Draht-Taktrichtung - Drahtbewegungsrichtung 26 - und Fig. 3 zeigt eine Ansicht in Draht-Taktrichtung - Drahtbewegungsrichtung 26.

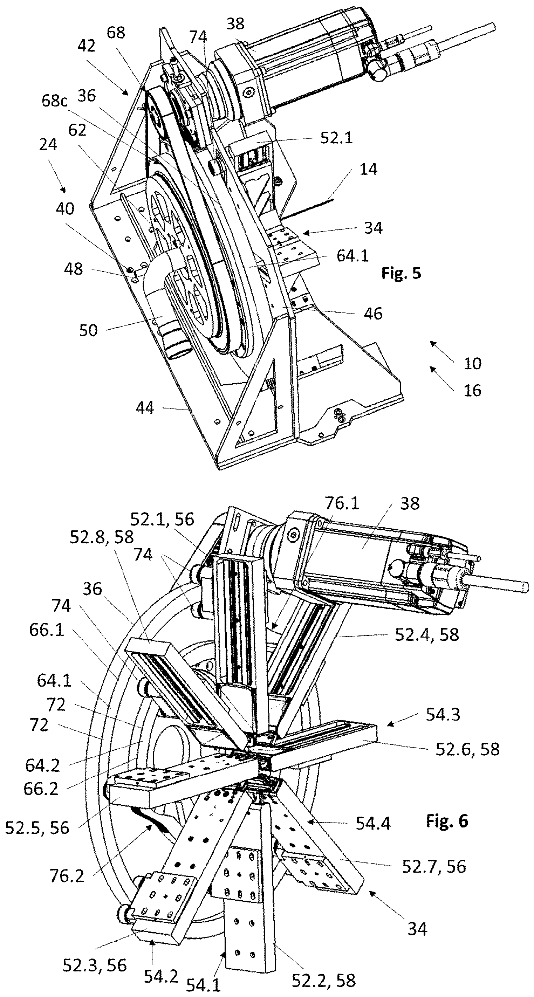

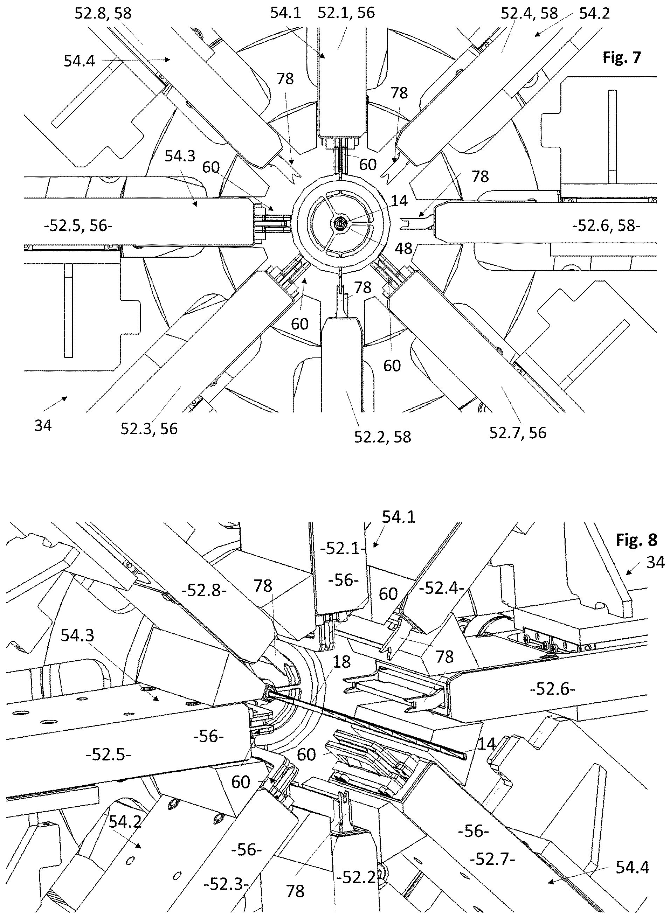

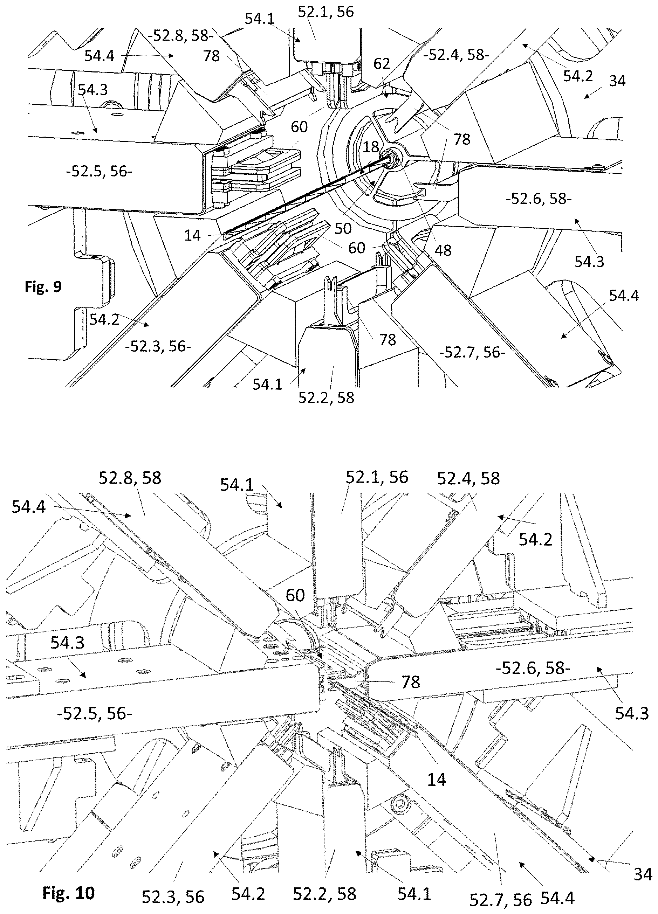

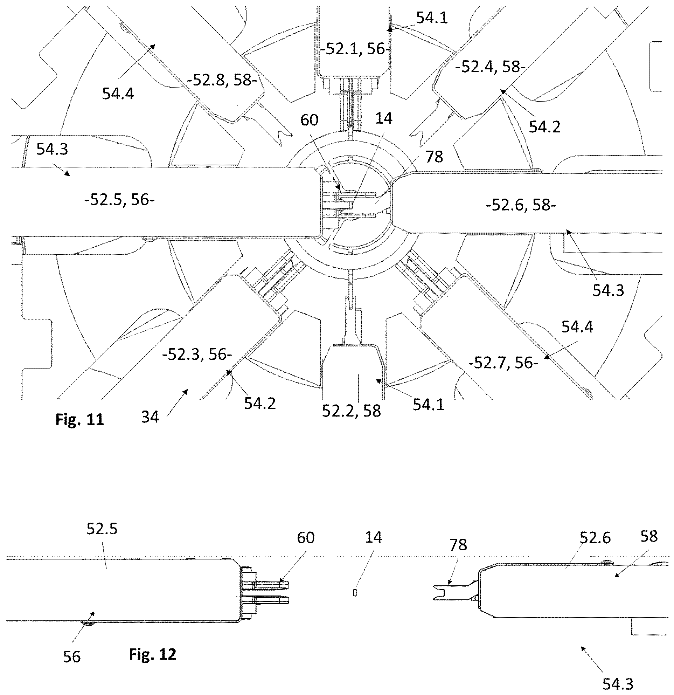

Im Folgenden wird auf die Fig. 6 bis 13 verwiesen, die unterschiedliche Ansichten der Schieberanordnung 34 und der Kurvenscheibe 36 zeigen. Dabei befinden sich die Schieber 52.1-52.8 bei den Darstellungen der Fig. 6 bis 8 sowie 12 und 13 in der Grundstellung, und bei den Darstellungen der Fig. 10 und 11 sind die Schieber 52.5, 52.6 eines der Schieber-Paare, hier z.B. des zum Abschaben der kleineren Seitenflächen des Rechteck-Drahts vorgesehenen dritten Schieber-Paares 54.3 in der Eingriffsstellung.

Die die Abisolierung durchführende Einrichtung 16 der hier dargestellten Ausführungsform der Vorrichtung 10 besteht somit im Wesentlichen aus acht Schiebern 52.1-52-8, angebracht an einer Schweißkonsole (Beispiel für Grundgestell 42). Die Schieber 52.1-52.8 sind bei der dargestellten Ausführungsform gleichmäßig im Kreis und im Winkel von 45° angeordnet und können radial (linear) nach innen, ins Zentrum, bewegt werden. Zwei sich gegenüberliegende Schieber 52.1, 52.2; 52.2, 52.3; 52.4, 52.5; 52.5, 52.6; 52.7, 52.8 bilden hierbei ein Paar 54.1-54.4 bestehend aus einem Gegenlagerschieber 58 mit einem Gegenhalter 78 und einem Schneidschieber 56 mit wenigstens einer Schneide 60.

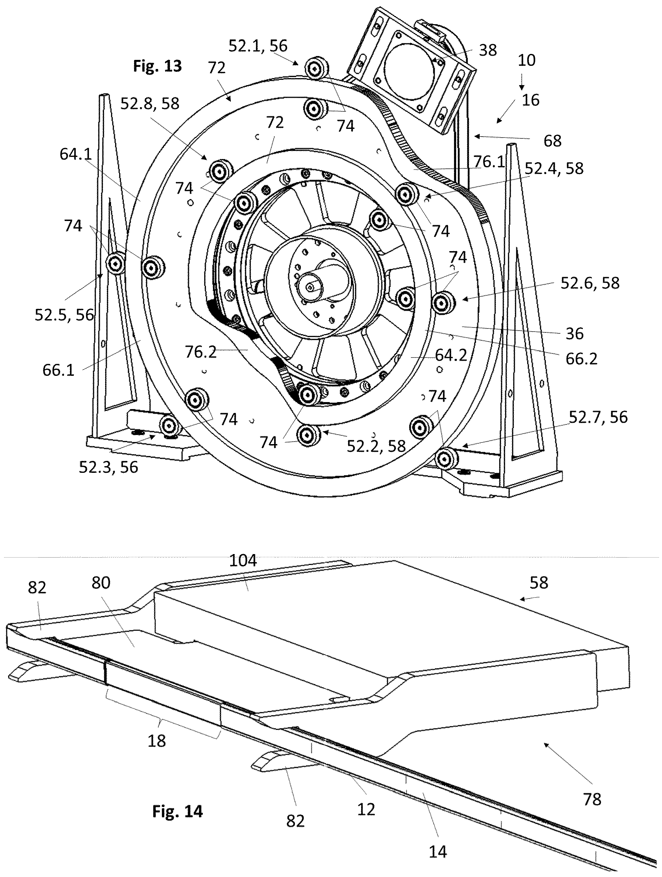

Wie man insbesondere der Darstellung der Fig. 6 und 13 entnehmen kann, sind der erste Steuerkurvenbereich 66.1 und der zweite Steuerkurvenbereich 66.2 auf unterschiedlichen Steuerkurven 64.1, 64.2 ausgebildet. Bei einigen Ausführungsformen (nicht dargestellt) sind die unterschiedlichen Steuerkurven axial beabstandet, z.B. auf unterschiedlichen Seiten der Kurvenscheibe angeordnet. Bei den dargestellten Ausführungsformen sind die erste und die zweite Steuerkurve 66.1, 66.2 radial beabstandet, wobei eine innere und eine äußere Steuerkurve ausgebildet sind.

Bei den dargestellten Ausgestaltungen ist der erste Steuerkurvenbereich 66.1 als in Umfangsrichtung verlaufender Oberflächenbereich auf dem gesamten Verlauf der ersten, hier ringförmig umlaufenden, Steuerkurve 64.1 ausgebildet, die zum Steuern und/oder Antreiben der Bewegung aller vier Schneidschieber 56 ausgebildet ist. Der zweite Steuerkurvenbereich 66.1 ist als in Umfangsrichtung verlaufender Oberflächenbereich auf dem gesamten Verlauf der zweiten, hier ringförmig umlaufenden, Steuerkurve 64.1 ausgebildet, der zum Steuern und/oder Antreiben der Bewegung aller Gegenlagerschieber 58 ausgebildet ist. Vorzugsweise ist die erste Steuerkurve 64.1 durch einen, vorzugsweise ringförmig umlaufenden, ersten Wulst 72.1 gebildet. Vorzugsweise ist die zweite Steuerkurve 64.2 durch einen, vorzugsweise ringförmig umlaufenden, zweiten Wulst 72.2 gebildet.

Die Steuerkurven 64.1, 64.2 sind bei den dargestellten Ausführungen somit als axial vorstehende Wülste 72.1, 72.2 ausgebildet. Die Schieber 52.1-52.8 weisen jeweils Paare von Kurvenfolgeelementen, insbesondere Stiften oder Kurvenrollen 74, auf, die den zugehörigen Wulst 72.1, 72.2 zwischen sich aufnehmen. Der Großteil der umlaufenden Steuerkurven 64.1, 64.2 verläuft kreisringförmig, um die daran angreifenden Schieber 52.1-52.8 in der Grundstellung zu halten. An einem Bereich des Umfangs weist die erste Steuerkurve 64.1 eine radial nach innen reichende erste Einbuchtung 76 auf. An der radial gegenüberliegend zu der ersten Einbuchtung 76.1 liegenden Stelle weist auch die zweite Steuerkurve 64.2 eine nach innen reichende zweite Einbuchtung 76.2 auf. Durchfahren bei Drehen der Kurvenscheibe 36 die zueinander gerichteten Einbuchtungen 76.1, 76.2 das Paar Kurvenrollen 74 der sich gegenüberliegenden Schieber 52.5, 52.6 eines Schieber-Paars 54.3 (in den Figuren beispielsweise das dritte Schieber-Paar 54.3), dann werden dadurch der jeweilige Schneidschieber 56 und der zugeordnete Gegenlagerschieber 58 aus der Grundstellung zueinander in die Eingriffsstellung bewegt. Durch einen bezogen auf die jeweilige Position in Umfangsrichtung unterschiedlichen Verlauf des ersten und zweiten Wulstes 72.1, 72.2 sind die Oberflächenverläufe an der ersten Einbuchtung unterschiedlich zu denjenigen der zweiten Einbuchtung 76.1, 76.2 ausgestaltet, um eine zeitlich unterschiedliche Bewegung des Schneidschiebers 56 und des zugeordneten Gegenlagerschiebers 58 hervorzurufen. Der Verlauf der Oberflächen - d.h. der Verlauf der Steuerkurvenbereich 66.1, 66.2 und Steuerkurven 64.1, 64.2 ist derart, dass die weiter unten erläuterten Bewegungsabläufe der Schieber 52.1-52.8 und deren Elemente erreicht werden.

Demnach sind bei einigen Ausführungsformen Kurvenrollen 74 aller Schieber 52.1-52.8 an einer von zwei Wülsten 72 angelegt, welche sich auf der Kurvenscheibe 34 befinden. Bei der dargestellten Ausführungsform sind vier Gegenlagerschieber 58, 52.2, 52.4, 52.6, 52.8 auf einer die zweite Steuerkurve 64.2 bildenden zweiten Wulst 72.2 angelegt, während vier Schneidschieber 56, 52.1, 52.3., 52.5, 52.7 auf der die erste Steuerkurve 64.2 bildenden ersten Wulst 72.1 angelegt sind. Die Kurvenscheibe 34 wird mittels Riementrieb 68 und einem Servomotor bewegt.

Das erste Schieber-Paar 54.1 mit dem ersten und zweiten Schieber 52.1, 52.2 ist zum Abschaben der größeren Seitenflächen 112 des im Querschnitt rechteckigen Drahtes 14 (siehe Fig. 25 und 26) ausgebildet. Das zweite Schieber-Paar 54.2 mit dem dritten und vierten Schieber 52.3, 52.4 ist zum Abschaben von sich in der einen Umfangsrichtung an die größeren Seitenflächen 112 anschließenden Eckkanten 114 ausgebildet. Das dritte Schieber-Paar 54.4 mit dem fünften und sechsten Schieber 52.5, 52.6 ist zum Abschaben der kleineren Seitenflächen 116 des im Querschnitt rechteckigen Drahtes 14 (siehe Fig. 25 und 26) ausgebildet. Das vierte Schieber-Paar 54.1 mit dem siebten und achten Schieber 52.7, 52.8 ist zum Abschaben von sich in der anderen Umfangsrichtung an die größeren Seitenflächen 112 anschließenden Eckkanten 118 ausgebildet.

Bei einem Abschabvorgang werden bei der dargestellten Ausführungsform die Schieber-Paare 54.1-54.4 so betätigt, dass zunächst das Abschaben der Seitenflächen 112, 116 (in beliebiger Reihenfolge) und danach das Abschaben der Eckkanten 114, 118 (in beliebiger Reihenfolge) erfolgt. Beispielsweise werden die Schieber-Paare 54.1-54.4 bei der dargestellten Ausführung in der Reihenfolge erstes Schieber-Paar 54.1 - drittes Schieber-Paar 54.3 - zweites Schieber-Paar 54.2 - viertes Schieber-Paar 54.4 betätigt.

Das mittels der Vorrichtung 10 durchführbare Verfahren zum Entfernen der Isolierschicht auf Längenabschnitten 18 des als Draht 14 ausgebildeten Leiters umfasst die Schritte:
a) Relativbewegen der Vorrichtung 10 und des zu bearbeitenden Drahts 14 in dessen Längsrichtung, so dass eine relative Bewegung des Drahts 14 durch das Zentrum der Schieberanordnung 34 erfolgt, und
b) Stoppen der Relativbewegung - z.B. durch Mitbewegen der Einrichtung 15 mit dem Draht 14 - und
c) Drehen der Kurvenscheibe 38, um die Schieber 52.1-52.8 zum Abschaben der Isolierung anzutreiben; und
Wiederholen der Schritte a) bis c), um den Draht 14 an einem anderen Längenabschnitt 18 abzuisolieren.

Somit lässt sich auf nur einem Stopp der Endlos-Hairpin-Draht abisolieren. Es lässt sich zum Beispiel eine Taktzeit von nur ca. einer Sekunde erreichen, wovon ca, 0,4 Sekunden zum Abisolieren und 0.6 Sekunden zur Bewegung der Einrichtung zur nächsten Abisolierstelle benötigt werden. Die Einrichtung 16 benötigt nur einen einzelnen Servomotor (oder sonstige geeignete Art von Kurvenscheibenantrieb 38).

Im Folgenden wird ein beispielhafter Aufbau des Gegenlagerschiebers 58 anhand der Darstellung in den Fig. 12, 14 und 15 näher erläutert. Darin ist das zum Draht 14 hin gerichtete Vorderende des Gegenlagerschiebers 58 mit dem Gegenhalter 78 dargestellt.

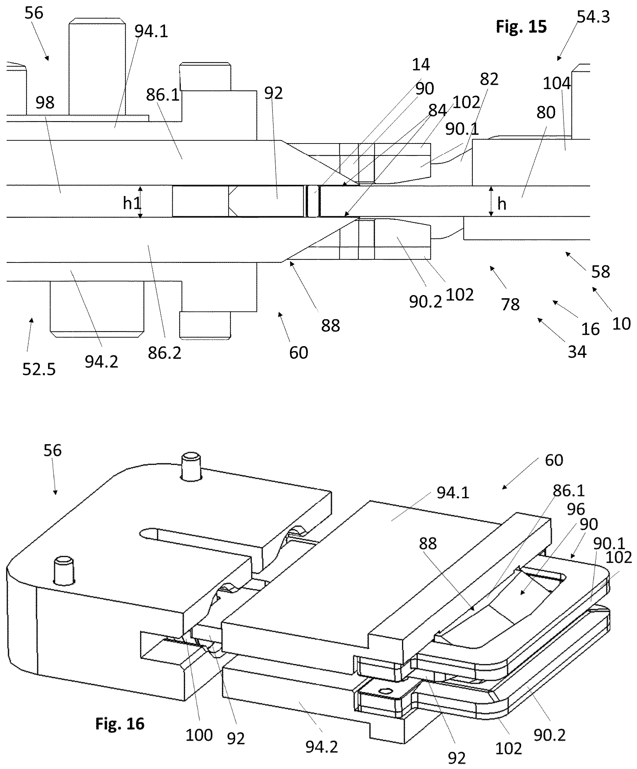

Der Gegenhalter 78 weist ein Gegenhalterblech 80 und daran angebrachte Führungszangen 82 auf, die den Draht 14 für die Schneide 60 vorpositioniert. Wie insbesondere aus Fig. 15 ersichtlich, ist das Gegenhalterblech 80 in seiner Höhe h so definiert, dass sie der gewünschten minimalen Abmessung des abisolierten Drahts 14 (in Richtung quer zur Bewegungsrichtung des Gegenlagerschiebers 58 und quer zur Drahtbewegungsrichtung 26) abzüglich zweimal der Breite eines Schneidspalts 84 (ca. 0,05 mm bis 0,1 mm) entspricht. Fig. 15 zeigt hierzu außerdem ein erstes und zweites Messer 86.1, 86.2 eines Messersatzes 88 des Schneidschiebers 56, deren Abstand zueinander auf die gewünschte minimale Abmessung des abisolierten Drahtes 14 eingestellt ist.

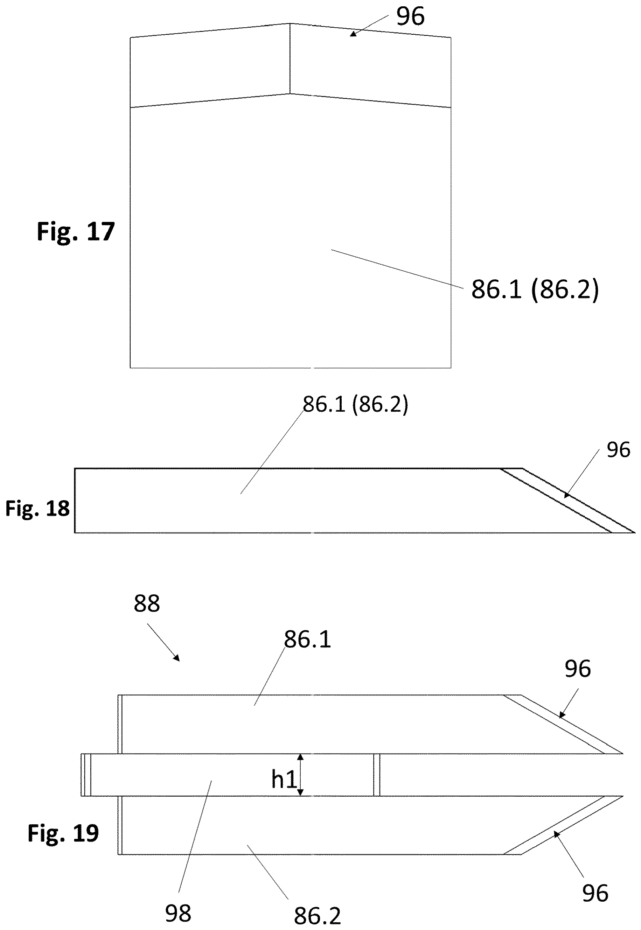

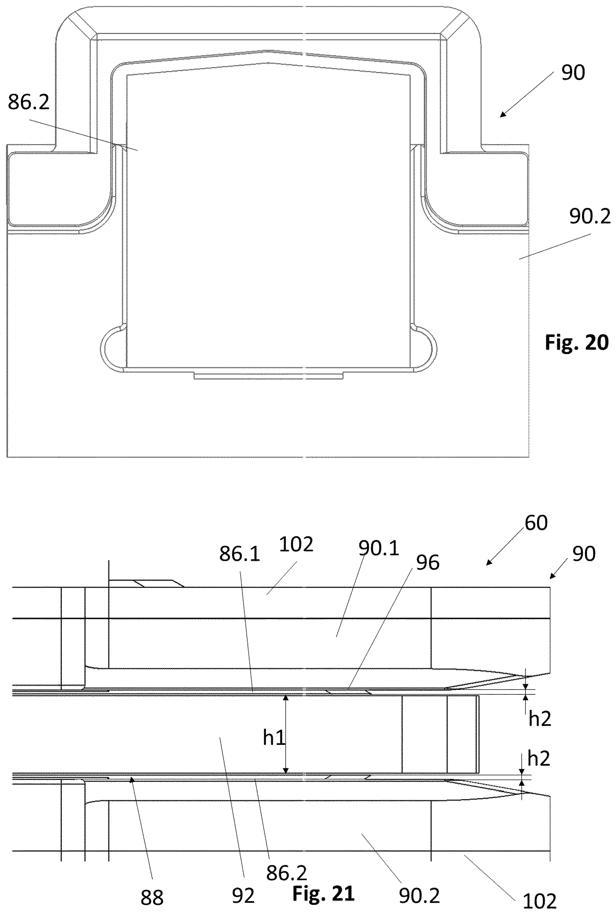

Im Folgenden wird ein beispielhafter Aufbau des Schneidschiebers 56 anhand der Darstellung in den Fig. 12 und 15 bis 24 näher erläutert. Dabei zeigt Fig. 12 die zueinander gerichteten Vorderenden des Schneidschiebers 56 und des zugeordneten Gegenlagerschiebers 58 eines der Schieber-Paare 52.1-52.4, hier beispielsweise des dritten Schieber-Paars 52.3, wobei sich die Schieber 56, 58 in der Grundstellung mit Abstand zu dem Draht 14 befinden. Fig. 15 zeigt ein Detail der Vorderenden bei sich in der Eingriffstellung befindlichen Schneidschieber 56 und Gegenlagerschieber 58. Fig. 16 zeigt eine perspektivische Darstellung des Vorderendes des Schneidschiebers 56 mit der Schneide 60. Fig. 17 und 18 zeigen zwei Ansichten eines der Messer 86.1, 86.2 des Messersatzes 88 der Schneide 60. Fig. 19 zeigt den auf den passenden Abstand eingestellten Messersatz 88. Fig. 20 bis 24 verdeutlichen die Anordnung von Führungselementen 90 und eines Auswurfelements 92 in der Schneide 60.

Wie aus diesen Darstellungen ersichtlich, weist die Schneide 60 ein als Hartmetallmesser ausgebildetes erstes Messer 86.1, ein als Hartmetallmesser ausgebildetes zweites Messer 86.2, ein erstes und ein zweites Führungsblech 90.1, 90.2 als jeweils dem ersten bzw. zweiten Messer 86.1, 86.2 zugeordnete Führungselemente 90, einen gefederten Auswerfer als Auswurfelement 92 und eine erste und eine zweite Halteplatte 94.1, 94.2 auf.

Wie man den Fig. 17 und 18 entnehmen kann, ist jedes Messer 86.1, 86.2 eine flache Hartmetallplatte mit einer angespitzten Form. Die Spitze ist angefast und bildet so einen Keilwinkel 96. Wie in Fig. 19 dargestellt, werden das erste und zweite Messer 86.1, 86.2 mit einer Abstimmscheibe 98 als Messersatz 88 zusammengeführt. Die Höhe h1 der Abstimmscheibe 98 bestimmt das Schneidmaß, das zu der oben erwähnten gewünschten Draht-Abmessung nach dem Abisolieren führt.

Es wird nun auf die Fig. 20 und 21 Bezug genommen. Das jeweilige z.B. als Führungsblech 90.1 ausgebildete Führungselement 90 umschließt das zugeordnete Messer 86.1 des Messersatzes 88 mit einer U-Form und bestimmt durch einen definierten Höhenversatz h2 zum Messer 86.1 die Eindringtiefe des Messers 86.1 in den Draht 14.

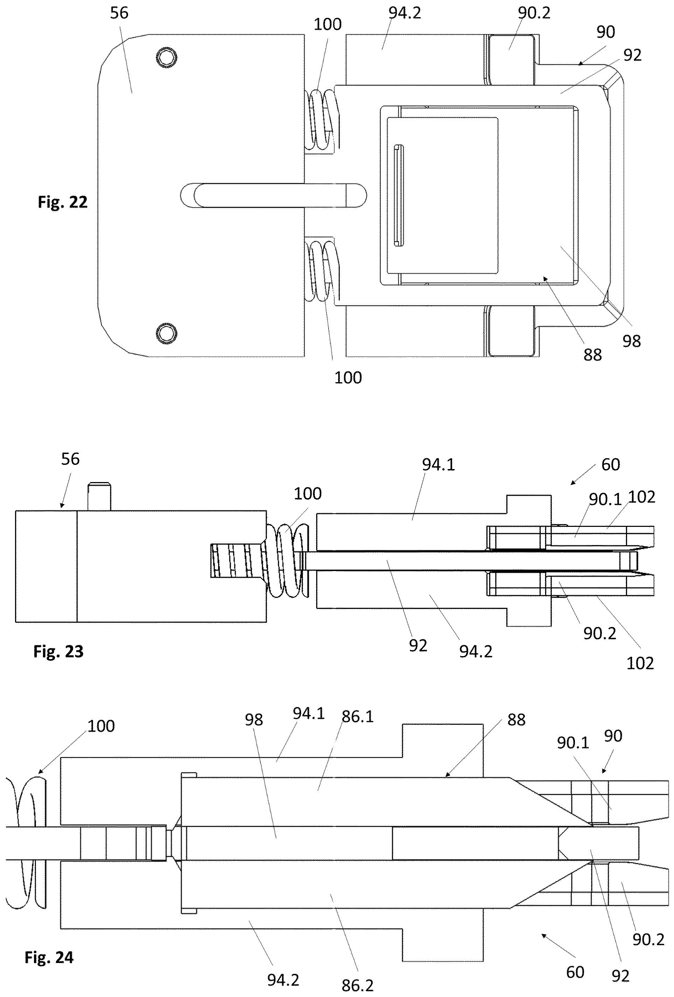

Wie man den Fig. 22 bis 24 entnehmen kann, befindet sich zwischen den abgestimmten Messern 86.1, 86.2 und den z.B. als Führungsbleche 90.1, 90.2 ausgebildeten Führungselementen 90 ein mittels Feder(n) 100 in seine Auswurfstellung vorgespannter Auswerfer als Auswurfelement 92. Das Auswurfelement 92 ist dazu ausgebildet, den Draht 14 nach dem Abisolieren wieder aus der Schneide 60 drückt.

Gemäß Fig. 24, auf die nun Bezug genommen wird, wird zum Einstellen des nötigen Schneidmaßes (Abmessung des Drahts nach dem Abisolieren) am Draht die Abstimmscheibe 98 zwischen den Messern 86.1, 86.2 auf die nötige Dicke abgestimmt. Das maximal mögliche Draht-Abmaß vor dem Abisolieren wird über Führungselement-Abstimmscheiben 102 an den Führungselementen 90 hergestellt. Gleichzeitig sollte auf den gleichen Höhenunterschied, auf beiden Seiten, zwischen Führungselement 90 und Messer 86.1, 86.2 geachtet werden, um einen symmetrischen Abtrag zu ermöglichen.

Sind somit Messer 86.1, 86.2 und Führungselemente 90 passend positioniert, werden der Gegenhalter 78 und die Schneide 60 gemäß der Darstellung von Fig. 15 mittels Gegenhalter-Abstimmscheiben 104 zueinander ausgerichtet, um einen gleichen Schneidspalt 84 zwischen den Messern 86.1, 86.2 und dem Gegenhalter 78 herzustellen.

Im Folgenden wird eine detailliertes Ausführungsbeispiel für einen Verfahrensablauf des Abisolierens als Ausführungsbeispiel für die Programmierung der Steuereinheit 22 zum Steuern der Funktionen der Vorrichtung und als Ausführungsbeispiel für das Verfahren erläutert.

Der Draht 14 wird beispielsweise als Hairpin-Draht von einer Biegeanlage zum Herstellen von Hairpins, in der die Vorrichtung 10 verwendet wird, in der Vorrichtung 10 positioniert. Derartige Biegeanlagen sind beispielsweise aus [1] bis [4] bekannt. Der Bewegungsaktor treibt den Wagen 30 zur Mitbewegung mit dem Draht 14 an. Der Servomotor des Kurvenscheibenantriebs 38 treibt den Riementrieb 68 und somit die Kurvenscheibe mit dem ersten und zweiten Wulst 72.1, 72.2 an. Die Kurvenrollen 74 geben die Bewegung an die Schieber 52.1-52.8 weiter und diese bewegen sich linear Richtung Zentrum.

Durch die unterschiedliche Ausführung der Wülste 72.1, 72.2 auf der Kurvenscheibe 36, siehe Fig. 13, eilt der Gegenlageschieber 58 mit dem Gegenhalter 78 dem Schneidschieber 56 mit der Schneide 60 voraus. Kurz vor der Endposition des Gegenhalters 78 im Zentrum wird der Draht 14 über die mehreren, z.B. zwei, Führungszangen 82 mit geringem Spiel auf Position gehalten. In seiner Endposition verweilt der Gegenhalter 78 bis auf weiteres mit Kontakt zum Draht 14.

Der Schneidschieber 56 mit der Schneide 60 zentriert final den Draht 14 über dessen Führungsbleche 90.1, 90.2, und die Messer 86,1, 86.2 schaben die Isolationsschicht 12 (inkl. etwas Kupfer) ab. Dabei drückt der gefederte Auswerfer - Auswerfelement 90 - den Draht 14 an den Gegenhalter 78 - z.B. wird die Feder 100 gestaucht. Durch die Anordnung der Messer 86.1, 86.2 wird auf beiden Seiten Material vom Draht 14 abgeschabt. Der fertig geschabte Draht 14 bewegt sich somit zwischen den Messern 86.1, 86.2, siehe Fig. 10, 11 und 15.

Ist die Schneide 60 an ihrer Endposition angelangt, wird diese über die Kontur der ersten Wulst 72.1 und den an dem Schneidschieber 56 angeordneten Kurvenrollen 74 sofort wieder in Grundstellung bewegt (radial nach außen).

Dabei drückt das hier als gefederte Auswerfer ausgebildete Auswurfelement 90 weiter den Draht 14 gegen den Gegenhalter 78; die Feder 100 entspannt sich wieder. Das Auswerfelement 90 drückt, während der Bewegung der Schneide 60, den Draht 14 auch aus den Messern 86.1, 86.2, um einer Verformung des Drahtes 14 entgegenzuwirken.

Ist die Schneide 60 weit genug zurückgezogen und der abisolierte Draht 14 aus den Messern 86.1, 86.2 gedrückt, fährt der Gegenhalter 78 in seine Grundstellung. Nun sind zwei Seiten des Drahtes abisoliert.

Der oben genannte Bewegungsablauf wiederholt sich noch an den anderen drei der vier Schieber-Paare (er wiederholt sich noch dreimal). Somit sind alle vier Seiten und vier Radien des Drahtes 14 auf der zuvor definierten Breite abisoliert.

Beim Abisolieren der Radien des Drahtes 14 ergibt sich folgende Besonderheit. Aufgrund der linearen Bewegung der Schneide 60 wird der Radius am Draht nach dem Abisolieren zu einer Fase im Kupfer. Fig. 26 zeigt hierzu einen Querschnitt durch den abisolierenden Längenabschnitt 18 vor dem Abisolieren und Fig. 27 zeigt den gleichen Querschnitt nach dem Abisolieren. Die Radien 108 werden nach dem Abisolieren zu Fasen 110.

Weitere mögliche Ausführungsbeispiele:
In einigen - nicht dargestellten Ausführungsformen - ist die Vorrichtung nur mit dem ersten und zweiten Schieber 52.1, 52.2 ausgestattet und weist somit nur das erste Schieber-Paar 54.1 mit nur zwei Schiebern auf, d.h. lediglich einem Schneidschieber 56 und einem Gegenlagerschieber 58. Dies ist für Hairpin-Verfahren möglich, da es prinzipiell zum Verschweißen der beim Verschweißen in einem Parallelstoß angeordneten Drahtenden reicht, wenn lediglich die Längsseite - größere Seitenfläche 112 - des Drahtes 14, die beim Verschweißen im Parallelstoß mit dem damit zu verschweißenden weiteren Draht aneinander liegt, abisoliert ist (und aufgrund des gewählten symmetrischen Schneidenaufbaus auch die dazu parallele weitere Längsseite).

Insbesondere bei dem Aufbau mit nur einem Schieber-Paar 54.1 kann die Kurvenscheibe 36 auch nur mit einer Steuerkurve versehen sein, die an einem Umfangsbereich die erste Einbuchtung 76.1 als Teil des ersten Steuerkurvenbereichs 66.1 zur Steuerung des Schneidschiebers 56 und auf dem gegenüberliegenden Umfangsbereich die zweite Einbuchtung 76.2 als Teil des zweiten Steuerkurvenbereichs 66.2 zur Steuerung des Gegenlagerschiebers 58 aufweist. Die entsprechend modifizierte nur eine Steuerkurve (Wulst) mit den gegenüberliegenden ersten und zweiten Einbuchtungen 76.1, 76.2 ist somit sowohl zum Antreiben der Bewegung des Schneidschiebers 56 als der Bewegung des Gegenlagerschieber 58 ausgebildet. Die entsprechend angepasste Kurvenscheibe 36 wird dann auch nur um bis zu 180 Grad gedreht, und dann wieder zurückgedreht. In einer Variante können auch der erste und der zweite Wulst 72.1, 72.2 sich jeweils nur über einen Teilbereich des Umfangs erstreckend ausgebildet sein, sie können sich beispielsweise jeweils über entgegengesetzte Hälften eines Kreises erstrecken. Mit anderen Worten kann bei der Variante mit weniger Schiebern z.B. der sich der jeweiligen Einbuchtung 76.1, 76.2 gegenüberliegende Teil des Wulstes 72.1, 72.2 auch weggelassen werden.

Bei anderen Ausgestaltungen sind anstatt Wulsten 72.1, 72.2 andere Ausbildungen mit den Steuerkurven an der Kurvenscheibe 36 vorgesehen, z.B. Nuten, Schlitze, Ränder.

Bei anderen Ausführungsformen weist die Schieberanordnung nur das erste und das zweite Schieber-Paar 54.1, 54.2 mit dem ersten bis vierten Schieber 52.1-52.4 zum Abisolierung der längeren Drahtseiten und benachbarter Radien des Drahtes 14 auf. Auch das Vorsehen von drei Schieber-Paaren 54.1, 54.2, 54.4 ist möglich, so dass nur zwei gegenüberliegenden Seiten des Drahtes und alle Ecckanten abisoliert werden.

Wie oben erläutert, kann die "Bearbeitung in einem Stopp" eine Bearbeitung an einem bewegten Draht mit mitbewegter Bearbeitungseinrichtung 16 sein. Durch die Bearbeitung mit einem Stopp kann die Bearbeitung durch eine einzige Einheit - Einrichtung 16 mit der Schieberanordnung 34 - durchgeführt werden, anstatt bspw. verschiedene unabhängige Einheiten vorzusehen, die die Bearbeitung einzeln und dann sequentiell durchführen.

Bei anderen Ausführungsformen kann die Einrichtung 16 aber auch stationär sein, und der Bewegungsmechanismus 20 kann auch weggelassen werden. Bei diesen Ausführungsformen wird der Draht 14 beim Abisolieren angehalten, um beim Anhalten des Drahtes 14 die Drehung der Kurvenscheibe 36 zum Abisolieren durchzuführen.

Anstelle einer oder mehrere der Abstimmscheiben 98, 102, 104 können auch andere Abstandshalter zum Justieren und Einstellen des entsprechenden Abstandes vorgesehen sein.

Um in großindustrieller Serienfertigung ein prozesssicheres Abisolieren von Drähten für die Herstellung von Spulenwicklungen mit schneller Taktzeit bei hoher Qualität zu ermöglichen, ist eine Vorrichtung (10) zum Entfernen einer Isolierschicht (12) auf einem Längenabschnitt (18) eines Drahts (14) zum Bilden einer Spulenwicklung einer elektrischen Maschine beschrieben worden, umfassend:
eine Drahtführung (24) zum Hindurchführen des zu bearbeitenden Drahtes (14) in einer Drahtbewegungsrichtung (26);
eine Schieberanordnung (34) mit mehreren Schiebern (52.1-52.8), die um den durch die Drahtführung (24) zu führenden Draht (14) herum angeordnet sind und radial zum in der Drahtführung (24) geführten Draht (14) hin und her verschiebbar sind, wobei wenigstens ein Schneidschieber (56) mit einer Schneide (60) zum Abschaben der Isolierung (12) und wenigstens ein Gegenlagerschieber (58) zum Gegenhalten des Drahtes (14) beim Abschaben derart vorgesehen sind, dass sich jeweils ein Schneidschieber (56) und ein Gegenlagerschieber (58) gegenüberstehen und aufeinander zu und voneinander weg bewegbar sind, und
eine Kurvenscheibe (36) mit einer Ausnehmung oder Öffnung (62), durch die der Draht (14) mittels der Drahtführung (24) hindurchführbar ist, wobei die Kurvenscheibe (36) durch einen Kurvenscheibenantrieb (38) drehbar ist und einen ersten zumindest teilweise ringförmig umlaufende Steuerkurvenbereich (66.1) zum Steuern und/oder Antreiben der Bewegung des wenigstens einen Schneidschiebers (56) und einen zweiten zumindest teilweise ringförmig umlaufenden Steuerkurvenbereich (66.2) zum Steuern und/oder Antreiben der Bewegung des wenigstens einen Gegenlagerschiebers (58) hat.

Weiter ist ein Verfahren zum Entfernen einer Isolierschicht (12) auf einem Längenabschnitt (18) eines Drahts (14) zum Bilden einer Spulenwicklung einer elektrischen Maschine beschrieben worden, umfassend:
Bereitstellen einer Vorrichtung (10) der voranstehend genannten Art, und taktweises Durchführen der Schritte:
   a) Relativbewegen der Vorrichtung (10) und des zu bearbeitenden Drahts (14) in dessen Längsrichtung, so dass eine relative Bewegung des Drahts (14) durch das Zentrum der Schieberanordnung (34) erfolgt und
   b) Stoppen der Relativbewegung und
   c) Drehen der Kurvenscheibe (36), um die Schieber (52.1-52.8) zum Abschaben der Isolierung (12) anzutreiben; und
Wiederholen der Schritte a) bis c), um den Draht (14) an einem anderen Längenabschnitt (18) abzuisolieren.

### Bezugszeichenliste:

- 10: Vorrichtung
- 12: Isolierschicht (elektrische Isolierung)
- 14: Draht (Leiter)
- 16: Einrichtung
- 18: Längenabschnitt
- 20: Bewegungsmechanismus
- 22: Steuereinheit
- 22a: Prozessor
- 22b: Speicher (mit darin gespeichertem Computerprogramm)
- 24: Drahtführung
- 26: Drahtbewegungsrichtung
- 28: Maschinengestell
- 30: Wagen
- 32: Bewegungsaktor
- 34: Schieberanordnung
- 36: Kurvenscheibe
- 38: Kurvenscheibenantrieb
- 40: Drahtführungseinheit
- 42: Grundgestell
- 44: Basis
- 46: Befestigungsplatte
- 48: Führungsröhre
- 50: Absaugrohr
- 52.1: erster Schieber
- 52.2: zweiter Schieber
- 52.3: dritter Schieber
- 52.4: vierter Schieber
- 52.5: fünfter Schieber
- 52.6: sechster Schieber
- 52.7: siebter Schieber
- 52.8: achter Schieber
- 54.1: erstes Paar von Schiebern
- 54.2: zweites Paar von Schiebern
- 54.3: drittes Paar von Schiebern
- 54.4: viertes Paar von Schiebern
- 56: Schneidschieber
- 58: Gegenlagerschieber
- 60: Schneide
- 62: Mittelöffnung
- 64.1: erste Steuerkurve
- 64.2: zweite Steuerkurve
- 66.1: erster Steuerkurvenbereich
- 66.2: zweiter Steuerkurvenbereich
- 68: Riementrieb
- 68a: Zahnriemenscheibe
- 68b: Zahnriemen
- 68c: Zahnriemenscheibenbereich
- 72: Wulst
- 74: Kurvenrolle
- 76.1: erste Einbuchtung
- 76.2: zweite Einbuchtung
- 78: Gegenhalter
- 80: Gegenhalterblech
- 82: Führungszange
- 84: Schneidspalt
- 86.1: erstes Messer
- 86.2: zweites Messer
- 88: Messersatz
- 90: Führungselement
- 90.1: erstes Führungsblech
- 90.2: zweites Führungsblech
- 92: Auswurfelement
- 94.1: erste Halteplatte
- 94.2: zweite Halteplatte
- 96: Keilwinkel
- 98: Abstimmscheibe9
- 100: Feder
- 102: Führungselement-Abstimmscheibe
- 104: Gegenhalter-Abstimmscheibe
- 108: Radius an Kanten des Drahts
- 110: Fasen an Eckkanten des abisolierten Längenabschnitts
- 112: größere Seitenfläche
- 114: in der einen Umfangsrichtung (z.B. Uhrzeigersinn) an die größeren Seitenflächen anschließende Eckkanten
- 116: kleinere Seitenfläche
- 118: in der anderen Umfangsrichtung (z.B. Gegenuhrzeigersinn) an die größeren Seitenflächen anschließende Eckkanten
- h: Höhe Gegenlagerblech
- h1: Höhe Abstimmscheibe (=gewünschte Drahtabmessung an dem abisolierten Längenabschnitt)
- h2: Höhenversatz (bestimmt Eindringtiefe des Messers in Draht

## Patentansprüche

1. Vorrichtung (10) zum Entfernen einer Isolierschicht (12) auf einem Längenabschnitt (18) eines Drahts (14) zum Bilden einer Spulenwicklung einer elektrischen Maschine, umfassend:
eine Drahtführung (24) zum Hindurchführen des zu bearbeitenden Drahtes (14) in einer Drahtbewegungsrichtung (26);
eine Schieberanordnung (34) mit mehreren Schiebern (52.1-52.8), die um den durch die Drahtführung (24) zu führenden Draht (14) herum angeordnet sind und radial zum in der Drahtführung (24) geführten Draht (14) hin und her verschiebbar sind, wobei wenigstens ein Schneidschieber (56) mit einer Schneide (60) zum Abschaben der Isolierung (12) und wenigstens ein Gegenlagerschieber (58) zum Gegenhalten des Drahtes (14) beim Abschaben derart vorgesehen sind, dass sich jeweils ein Schneidschieber (56) und ein Gegenlagerschieber (58) gegenüberstehen und aufeinander zu und voneinander weg bewegbar sind, und
eine Kurvenscheibe (36) mit einer Ausnehmung oder Öffnung (62), durch die der Draht (14) mittels der Drahtführung (24) hindurchführbar ist, wobei die Kurvenscheibe (36) durch einen Kurvenscheibenantrieb (38) drehbar ist und einen ersten zumindest teilweise ringförmig umlaufende Steuerkurvenbereich (66.1) zum Steuern und/oder Antreiben der Bewegung des wenigstens einen Schneidschiebers (56) und einen zweiten zumindest teilweise ringförmig umlaufenden Steuerkurvenbereich (66.2) zum Steuern und/oder Antreiben der Bewegung des wenigstens einen Gegenlagerschiebers (58) hat.

2. Vorrichtung (10) nach Anspruch 1, **dadurch gekennzeichnet,**
**dass** die Schieberanordnung (34) wenigstens zwei der Schneidschieber (56) und wenigstens zwei der Gegenlagerschieber (58) aufweist.

3. Vorrichtung (10) nach einem der voranstehenden Ansprüche, **dadurch gekennzeichnet**,
3.1 dass der erste und der zweite Steuerkurvenbereich (66.1, 66.2) unterschiedliche Bereiche einer gemeinsamen zumindest teilweise oder vollständig ringförmig umlaufenden Steuerkurve sind; oder
3.2 dass der erste Steuerkurvenbereich (66.1) und der zweite Steuerkurvenbereich (66.2) auf axial oder radial beabstandeten unterschiedlichen Steuerkurven (64.1, 64.2) ausgebildet sind; oder
3.3 dass der erste Steuerkurvenbereich (66.1) durch eine erste ringförmig umlaufende Steuerkurve (64.1) zum Steuern und/oder Antreiben der Bewegung mehrerer oder aller Schneidschieber (56) gebildet ist und dass der zweite Steuerkurvenbereich (66.2) durch eine zweite ringförmig umlaufenden Steuerkurve (64.1) zum Steuern und/oder Antreiben der Bewegung mehrerer oder aller Gegenlagerschieber (58) gebildet ist.

4. Vorrichtung (10) nach einem der voranstehenden Ansprüche, **dadurch gekennzeichnet**,
4.1 dass die Kurvenscheibe mittels eines durch eine elektronische Steuereinheit angesteuerten Servoantriebs als Kurvenscheibenantrieb drehangetrieben ist;
4.2 dass die Kurvenscheibe (36) mittels eines Endloszugmittelgetriebes, insbesondere Riementriebs (68), mit dem Kurvenscheibenantrieb (38) verbunden ist.

5. Vorrichtung (10) nach einem der voranstehenden Ansprüche, **dadurch gekennzeichnet,**
**dass** die Steuerkurvenbereiche (66.1, 66.2) oder Steuerkurven (64.1, 64.2) als axial vorstehende Wülste (72.1, 72.2) ausgebildet sind, wobei die Schieber (52.1-52.8) Paare von Kurvenfolgeelementen, insbesondere Stiften oder Kurvenrollen (74), aufweisen, die den zugehörigen Wulst (72.1, 72.2) zwischen sich aufnehmen.

6. Vorrichtung (10) nach einem der voranstehenden Ansprüche, **dadurch gekennzeichnet,**
**dass** die Schieberanordnung (34)
6.1 gleichmäßig im Kreis um das Zentrum, in dem der Draht (14) geführt wird, angeordnete Schieber (52.1-52.8) aufweist;
6.2 einen ersten bis vierten Schieber (52.1-52.4) aufweist;
6.3 einen ersten bis achten Schieber (52.1-52.8) aufweist; und/oder
6.4 mehrere Paare (54.1-54.4) sich radial gegenüberliegender Schieber (52.1-52.8) mit einem Schneidschieber (56) und einem Gegenhalterschieber (58) aufweist; und/oder
6.5 zur taktweisen Mitbewegung mit dem Draht (14) ausgebildet ist.

7. Vorrichtung (10) nach einem der voranstehenden Ansprüche, **dadurch gekennzeichnet,**
**dass** der oder die Schneidschieber (56) jeweils einen Messersatz (88) mit mehreren Messern (86.1, 86.2) aufweisen, die zum Abschaben der Isolierung (12) auf entgegengesetzten Seiten des Drahtes (14) ausgebildet sind.

8. Vorrichtung (10) nach Anspruch 7, **dadurch gekennzeichnet,**
**dass** der wenigstens eine Schneidschieber (56)
8.1 pro Messer (86.1, 86.2) ein Führungselement (90, 90.1, 90.2) aufweist, das jeweils um eine Messerschneide des Messers (86.1, 86.2) vorlaufend herumgeführt ist und einen Höhenversatz zum Messer (86.1, 86.2) aufweist, durch den die Eindringtiefe des Messers (86.1, 86.2) in den Draht (14) bestimmbar ist; und/oder
8.2 ein in eine Auswurfstellung elastisch vorgespanntes Auswurfelement (90) zum Unterstützen eines Auswerfens des Drahtes (14) aus dem Messersatz (88) aufweist; und/oder
8.3 eine Abstimmscheibe (98) zwischen den Messern (86.1, 86.2) zum Einstellen des Messerabstandes aufweist.

9. Vorrichtung (10) nach Anspruch 7 oder 8, **dadurch gekennzeichnet,**
**dass** der Messersatz (88)
9.1 ein erstes und ein zweites Messer (86.1, 86.2) aufweist; und/oder
9.2 Messer (86.1, 86.2) aufweist, die jeweils aus einer Hartmetallplatte mit einer angespitzten Form gebildet sind; und/oder
9.3 Messerschneidkanten an den Messern (86.1, 86.2) aufweist, deren Spitze angefast ist, um einen Keilwinkel (96) zu bilden.

10. Vorrichtung (10) nach einem der voranstehenden Ansprüche, **dadurch gekennzeichnet,**
**dass** der oder die Gegenlagerschieber (58) jeweils
10.1 ein Gegenlagerelement (80) zum Anlegen an den Draht (14) und/oder
10.2 Führungszangen (82) zum Vorpositionieren des Drahtes (14)
aufweisen.

11. Vorrichtung (10) nach einem der voranstehenden Ansprüche, **gekennzeichnet durch** eine elektronische Steuereinheit (22), die dazu ausgebildet ist, die Vorrichtung (10) anzusteuern zum taktweisen Durchführen der Schritte:
a) Relativbewegen der Vorrichtung (10) und des zu bearbeitenden Drahts (14) in dessen Längsrichtung, so dass eine relative Bewegung des Drahts (14) **durch** das Zentrum der Schieberanordnung (34) erfolgt und
b) Stoppen der Relativbewegung und
c) Drehen der Kurvenscheibe (36), um die Schieber (52.1-52.8) zum Abschaben der Isolierung (12) anzutreiben; und
Wiederholen der Schritte a) bis c), um den Draht (14) an einem anderen Längenabschnitt (18) abzuisolieren.

12. Vorrichtung (10) nach Anspruch 11, **dadurch gekennzeichnet,**
**dass** die Steuereinheit (22) dazu ausgebildet ist, die Vorrichtung (10) beim Durchführen von Schritt c) zum Drehen der Kurvenscheibe (36) mit wenigstens einer vollständigen Umdrehung anzusteuern, um nacheinander die Schieber (52.1-52.8) zum Abschaben der Isolierung (12) anzutreiben.

13. Verfahren zum Entfernen einer Isolierschicht (12) auf einem Längenabschnitt (18) eines Drahts (14) zum Bilden einer Spulenwicklung einer elektrischen Maschine, umfassend:
Bereitstellen einer Vorrichtung (10) nach einem der voranstehenden Ansprüche, und taktweises Durchführen der Schritte:
a) Relativbewegen der Vorrichtung (10) und des zu bearbeitenden Drahts (14) in dessen Längsrichtung, so dass eine relative Bewegung des Drahts (14) durch das Zentrum der Schieberanordnung (34) erfolgt und
b) Stoppen der Relativbewegung und
c) Drehen der Kurvenscheibe (36), um die Schieber (52.1-52.8) zum Abschaben der Isolierung (12) anzutreiben; und
Wiederholen der Schritte a) bis c), um den Draht (14) an einem anderen Längenabschnitt (18) abzuisolieren.

14. Verfahren nach Anspruch 13, wobei eine Vorrichtung (10) mit wenigstens zwei Schneidschiebern (56) und wenigstens zwei Gegenlagerschiebern (58) bereitgestellt wird, wobei Schritt b) umfasst: Drehen der Kurvenscheibe (36) mit wenigstens einer vollständigen Umdrehung, um nacheinander die Schieber (52.1-52.8) zum Abschaben der Isolierung (12) anzutreiben.

15. Computerprogramm, umfassend Befehle, die bewirken, dass die Vorrichtung (10) nach einem der Ansprüche 1 bis 12 die Verfahrensschritte nach Anspruch 13 oder 14 ausführt.

## Claims

1. Apparatus (10) for removing an insulating layer (12) on a length section (18) of wire (14) for forming a coil winding of an electrical machine, the apparatus comprising:
a wire guide (24) for guiding through the wire (14) to be processed in a wire moving direction (26);
a slider arrangement (34) having a plurality of sliders (52.1-52. 8) which are arranged around the wire (14) to be guided through the wire guide (24) and can be displaced radially back and forth relative to the wire (14) guided in the wire guide (24), wherein at least one cutting slider (56) with a cutting edge (60) for scraping the insulation (12) and at least one counter bearing slider (58) for holding the wire (14) during scraping are provided in such a way that in each case a cutting slider (56) and a counter bearing slider (58) are opposite one another and can be moved towards and away from one another, and
a cam disk (36) with a recess or opening (62) through which the wire (14) can be guided by means of the wire guide (24), the cam disk (36) being rotatable by a cam disk drive (38) and having a first at least partially annularly revolving control cam portion (66. 1) for controlling and/or driving the movement of the at least one cutting slider (56) and a second at least partially annularly revolving control cam portion (66.2) for controlling and/or driving the movement of the at least one counter bearing slider (58).

2. Apparatus (10) according to claim 1, **characterized in**
**that** the slider arrangement (34) comprises at least two of the cutting sliders (56) and at least two of the counter bearing sliders (58).

3. Apparatus (10) according to any one of the preceding claims, **characterized in that**
3.1 the first and second control cam portions (66.1, 66.2) are different portions of a common at least partially or completely annularly revolving control cam; or
3.2 the first control cam portion (66.1) and the second control cam portion (66.2) are formed on axially or radially spaced different control cams (64.1, 64.2); or
3.3 the first control cam portion (66.1) is formed by a first annularly revolving control cam (64.1) for controlling and/or driving the movement of several or all cutting sliders (56) and the second control cam portion (66.2) is formed by a second annularly revolving control cam (64.1) for controlling and/or driving the movement of several or all counter bearing sliders (58).

4. Apparatus (10) according to any one of the preceding claims, **characterized in that**
4.1 the cam disk is rotationally driven by means of a servo drive as a cam disk drive controlled by an electronic control unit;
4.2 the cam disk (36) is connected to the cam disk drive (38) by means of an endless traction drive, in particular a belt drive (68).

5. Apparatus (10) according to any one of the preceding claims, **characterized in that** the control cam portions (66.1, 66.2) or control cams (64.1, 64.2) are designed as axially projecting beads (72.1, 72.2), the sliders (52.1-52.8) having pairs of cam follower elements, in particular pins or cam rollers (74), which receive the associated bead (72.1, 72.2) between them.

6. Apparatus (10) according to any one of the preceding claims, **characterized in that** the slider arrangement (34)
6.1 has sliders (52.1-52.8) arranged evenly in a circle around the center in which the wire (14) is guided;
6.2 has first to fourth sliders (52.1-52.4);
6.3 has first to eighth sliders (52.1-52.8); and/or
6.4 has several pairs (54.1-54.4) of radially opposite sliders (52.1-52.8) comprising a cutting slider (56) and a counter-holder slider (58); and/or
6.5 is designed for cyclical co-movement with the wire (14).

7. Apparatus (10) according to any one of the preceding claims, **characterized in that** the cutting slider or sliders (56) each have a blade set (88) with a plurality of blades (86.1, 86.2) which are designed to scrape the insulation (12) on opposite sides of the wire (14).

8. Apparatus (10) according to claim 7, **characterized in that**
the at least one cutting slider (56)
8.1 has one guide element (90, 90.1, 90.2) per blade (86.1, 86.2) which is guided in each case in a leading manner around a blade edge of the blade (86.1, 86.2) and has a height offset relative to the blade (86.1, 86.2) by means of which the penetration depth of the blade (86.1, 86.2) into the wire (14) can be determined; and/or
8.2 has an ejector element (90) which is elastically pre-loaded into an ejection position to support ejection of the wire (14) from the blade set (88); and/or
8.3 has a shim (98) between the blades (86.1, 86.2) for adjusting the distance between the blades.

9. Apparatus (10) according to claim 7 or 8, **characterized in that**
the blade set (88)
9.1 has a first and a second blade (86.1, 86.2); and/or
9.2 has blades (86.1, 86.2) which are each formed from a hard metal plate having a pointed shape; and/or
9.3 has blade cutting edges on the blades (86.1, 86.2), the tip of which is chamfered to form a wedge angle (96).

10. Apparatus (10) according to any one of the preceding claims, **characterized in that**
the counter bearing slider(s) (58) each have
10.1 a counter bearing element (80) for abutment against the wire (14) and/or
10.2 guide tongs (82) for pre-positioning the wire (14).

11. Apparatus (10) according to any one of the preceding claims, **characterized by** an electronic control unit (22) which is designed to control the device (10) to perform the steps in cycles:
a) relatively moving the device (10) and the wire (14) to be processed in the longitudinal direction thereof, so that a relative movement of the wire (14) through the center of the slider arrangement (34) takes place, and
b) stopping the relative movement and
c) rotating the cam disk (36) to drive the sliders (52.1-52.8) to scrape the insulation (12); and
repeating steps a) to c) to strip the wire (14) at another length section (18).

12. Apparatus (10) according to claim 11, **characterized in that**
the control unit (22) is designed to control the device (10) when performing step c) for rotating the cam disk (36) with at least one complete revolution to successively drive the sliders (52.1-52.8) to scrape the insulation (12).

13. Method of removing an insulating layer (12) on a length section (18) of wire (14) for forming a coil winding of an electrical machine, the method comprising:
providing an apparatus (10) according to any one of the preceding claims and performing the steps in cycles:
a) relatively moving the device (10) and the wire (14) to be processed in the longitudinal direction thereof, so that a relative movement of the wire (14) through the center of the slider arrangement (34) takes place, and
b) stopping the relative movement and
c) rotating the cam disk (36) to drive the sliders (52.1-52.8) to scrape the insulation (12); and
repeating steps a) to c) to strip the wire (14) at another length section (18).

14. Method according to claim 13, wherein an apparatus (10) with at least two cutting sliders (56) and at least two counter bearing sliders (58) is provided, wherein step b) comprises: rotating the cam disk (36) at least one complete revolution to successively drive the sliders (52.1-52.8) to scrape the insulation (12).

15. Computer program comprising instructions causing the device (10) according to any one of claims 1 to 12 to perform the method steps according to claim 13 or 14.

## Revendications

1. Dispositif (10) pour enlever une couche isolante (12) sur une section longitudinale (18) d'un fil (14) afin de former un enroulement de bobine d'une machine électrique, le dispositif comprenant:
un guide-fil (24) destiné à guider le fil (14) à traiter dans une direction de déplacement de fil (26);
un ensemble de coulisseaux (34) comportant une pluralité de coulisseaux (52.1-52. 8) qui sont disposés autour du fil (14) à guider à travers le guide-fil (24) et peuvent être déplacés radialement d'avant en arrière par rapport au fil (14) guidé dans le guide-fil (24), dans lequel au moins un coulisseau de coupe (56) avec un bord de coupe (60) pour gratter l'isolation (12) et au moins un coulisseau de contre-appui (58) pour le contre-appui du fil (14) pendant le grattage sont prévus de telle sorte qu'un coulisseau de coupe (56) et un coulisseau de contre-appui (58) se trouvent en face l'un de l'autre et peuvent être rapprochés et éloignés l'un de l'autre, et
un disque à came (36) avec un évidement ou une ouverture (62) à travers lequel le fil (14) peut être guidé au moyen du guide-fil (24), le disque à came (36) pouvant être mis en rotation par un entraînement de disque à came (38) et comportant une première partie de came au moins partiellement annulaire (66.1) pour commander et/ou entraîner le mouvement dudit au moins un coulisseau de coupe (56) et une deuxième partie de came (66.2) au moins partiellement annulaire (66.2) pour commander et/ou entraîner le mouvement dudit au moins un coulisseau de contre-appui (58).

2. Dispositif (10) selon la revendication 1, **caractérisé en ce que**
l'ensemble de coulisseaux (34) comprend au moins deux des coulisseaux de coupe (56) et au moins deux des coulisseaux de contre-appui (58).

3. Dispositif (10) selon l'une quelconque des revendications précédentes, **caractérisé en ce que**
3.1 les première et deuxième parties de came (66.1, 66.2) sont des parties différentes d'une came commune annulaire au moins partiellement ou complètement; ou
3.2 la première partie de came (66.1) et la deuxième partie de came (66.2) sont formées sur des cames de commande différentes (64.1, 64.2) espacées axialement ou radialement; ou
3.3 la première partie de came (66.1) est formée par une première came annulaire (64.1) pour commander et/ou entraîner le mouvement de plusieurs ou de tous les coulisseaux de coupe (56) et la deuxième partie de came (66.2) est formée par une deuxième came annulaire (64.1) pour commander et/ou entraîner le mouvement de plusieurs ou de tous les coulisseaux de contre-appui (58).

4. Dispositif (10) selon l'une quelconque des revendications précédentes, **caractérisé en ce que**
4.1 la came est entraîné en rotation au moyen d'un servomoteur en tant qu'entraînement de came commandé par une unité de commande électronique;
4.2 la came (36) est relié à l'entraînement de came (38) au moyen d'un entraînement à traction sans fin, en particulier un entraînement par courroie (68).

5. Dispositif (10) selon l'une quelconque des revendications précédentes, **caractérisé en ce que**
les parties de came (66.1, 66.2) ou les cames (64.1, 64.2) sont conçues comme des bourrelets saillants axialement (72.1, 72.2), les coulisseaux (52.1-52.8) comportant des paires d'éléments suiveurs de came, en particulier des goupilles ou des galets de came (74), qui reçoivent entre eux le bourrelet associé (72.1, 72.2).

6. Dispositif (10) selon l'une quelconque des revendications précédentes, **caractérisé en ce que**
l'ensemble de coulisseaux (34)
6.1 comporte des coulisseaux (52.1-52.8) disposés de manière régulière en cercle autour du centre dans lequel le fil (14) est guidé;
6.2 comporte des premier à quatrième coulisseaux (52.1-52.4);
6.3 comporte des premier à huitième coulisseaux (52.1-52.8); et/ou
6.4 comporte plusieurs paires (54.1-54.4) de coulisseaux radialement opposés (52.1-52.8) comprenant un coulisseau de coupe (56) et un coulisseau de contre-appui (58); et/ou
6.5 est conçu pour se déplacer de manière cyclique avec le fil (14).

7. Dispositif (10) selon l'une quelconque des revendications précédentes, **caractérisé en ce que**
le ou les coulisseaux de coupe (56) comportent chacun un ensemble de lames (88) avec une pluralité de lames (86.1, 86.2) qui sont conçues pour gratter l'isolation (12) sur des côtés opposés du fil (14).

8. Dispositif (10) selon la revendication 7, **caractérisé en ce que**
ledit au moins un coulisseau de coupe (56)
8.1 comporte un élément de guidage (90, 90.1, 90.2) par lame (86.1, 86.2) qui est guidé dans chaque cas de manière avant autour d'un bord de lame de la lame (86.1, 86.2) et qui présente un décalage en hauteur par rapport à la lame (86.1, 86.2) au moyen duquel la profondeur de pénétration de la lame (86.1, 86.2) dans le fil (14) peut être déterminée; et/ou
8.2 comporte un élément d'éjection (90) qui est précontraint élastiquement dans une position d'éjection pour faciliter l'éjection du fil (14) hors de l'ensemble de lames (88); et/ou
8.3 comporte un disque de réglage (98) entre les lames (86.1, 86.2) pour régler la distance entre les lames.

9. Dispositif (10) selon la revendication 7 ou 8, **caractérisé en ce que** l'ensemble de lames (88)
9.1 comporte une première et une deuxième lame (86.1, 86.2); et/ou
9.2 comporte des lames (86.1, 86.2) qui sont chacune formées à partir d'une plaque métallique dure ayant une forme pointue; et/ou
9.3 comporte des arêtes de coupe sur les lames (86.1, 86.2), dont la pointe est chanfreinée pour former un angle de coin (96).

10. Dispositif (10) selon l'une quelconque des revendications précédentes, **caractérisé en ce que**
le ou les coulisseaux de contre-appui (58) comportent chacun
10.1 un élément de contre-appui (80) destiné à s'appuyer contre le fil (14) et/ou
10.2 des pinces de guidage (82) destinées à prépositionner le fil (14).

11. Dispositif (10) selon l'une quelconque des revendications précédentes, **caractérisé par** une unité de commande électronique (22) qui est conçue pour commander le dispositif (10) afin d'exécuter les étapes suivantes en cycles:
a) déplacer relativement le dispositif (10) et le fil (14) à traiter dans la direction longitudinale de celui-ci, de sorte qu'un mouvement relatif du fil (14) à travers le centre de l'ensemble de coulisseaux (34) ait lieu, et
b) arrêter le mouvement relatif et
c) faire tourner le disque à came (36) pour entraîner les coulisseaux (52.1-52.8) afin de gratter l'isolation (12); et
répéter les étapes a) à c) pour dénuder le fil (14) au niveau d'une autre section de longueur (18).

12. Dispositif (10) selon la revendication 11, **caractérisé en ce que**
l'unité de commande (22) est conçue pour commander le dispositif (10) lors de l'exécution de l'étape c) afin de faire tourner la came (36) d'au moins un tour complet pour entraîner successivement les coulisseaux (52.1-52.8) afin de gratter l'isolation (12).

13. Procédé pour enlever une couche isolante (12) sur une section de longueur (18) d'un fil (14) afin de former un enroulement de bobine d'une machine électrique, le procédé comprenant:
fournir un dispositif (10) selon l'une quelconque des revendications précédentes et exécuter des étapes en cycles:
a) déplacer relativement le dispositif (10) et le fil (14) à traiter dans la direction longitudinale de celui-ci, de sorte qu'un mouvement relatif du fil (14) à travers le centre de l'ensemble de coulisseaux (34) ait lieu, et
b) arrêter le mouvement relatif et
c) faire tourner la came (36) pour entraîner les coulisseaux (52.1-52.8) afin de gratter l'isolant (12); et
répéter les étapes a) à c) pour dénuder le fil (14) au niveau d'une autre section de longueur (18).

14. Procédé selon la revendication 13, dans lequel un dispositif (10) avec au moins deux coulisseaux de coupe (56) et au moins deux coulisseaux de contre-appui (58) est prévu, dans lequel l'étape b) comprend:
faire tourner la came (36) d'au moins un tour complet pour entraîner successivement les coulisseaux (52.1-52.8) afin de gratter l'isolation (12).

15. Programme informatique comprenant des instructions amenant le dispositif (10) selon l'une quelconque des revendications 1 à 12 à exécuter les étapes de procédé selon la revendication 13 ou 14.
